# FASCICULE DE BREVET EUROPEEN

(11) **EP 2 118 817 B1**
(45) Date de publication et mention de la délivrance du brevet: **31.08.2011**
(21) Numéro de dépôt: 08799877.9
(22) Date de dépôt: 13.03.2008
(51) Int. Cl.: G06K 9/00

(54) **INSTALLATION ET PROCEDES D'IDENTIFICATION D'UN INDIVIDU PAR CAPTURE OPTIQUE D'UNE IMAGE D'UNE EMPREINTE CORPORELLE**
VERFAHREN UND GERÄT ZUR IDENTIFIZIERUNG EINES INDIVIDUUMS MITTELS OPTISCHER ERFASSUNG EINES KÖRPERABDRUCKBILDES
METHOD AND EQUIPMENT FOR THE IDENTIFICATION OF AN INDIVIDUAL BY OPTICAL CAPTURE OF A BODY IMPRINT IMAGE

(30) Priorité: 14.03.2007 FR 0701844
(43) Date de publication de la demande: 18.11.2009
(73) Titulaire: MORPHO, 75015 Paris (FR)
(72) Inventeur: BRINGER, Julien, 75015 Paris (FR); CHABANNE, Hervé, 75015 Paris (FR); JAROSZ, Hervé, 75015 Paris (FR)
(74) Mandataire: Cabinet Plasseraud
(86) Numéro de dépôt international: PCT/FR2008/050430
(87) Numéro de publication internationale: WO 2008/129201

(56) Documents cités:
- EP-A- 1 187 055
- WO-A-2006/043252
- WO-A2-2006/093508
- US-A1- 2003 016 345
- US-A1- 2004 179 723
- US-A1- 2004 184 641
- US-A1- 2007 014 437
- US-B1- 6 292 576

## Description

La présente invention concerne, d'une façon générale, le domaine de l'identification d'un individu par capture par voie optique d'une image d'une empreinte corporelle, notamment d'une empreinte digitale, dans une zone du corps de l'individu, traitement de cette image pour obtenir des données extraites de cette image d'empreinte corporelle, et traitement des données extraites de l'image capturée de l'empreinte corporelle en vue de l'identification de l'individu.

L'identification d'un individu à l'aide du relevé d'une empreinte corporelle prise sur une zone de son corps, et en particulier de façon la plus courante à l'aide d'une empreinte digitale prise sur la dernière phalange d'un de ses doigts, rencontre de nombreuses difficultés.

Un problème consiste, lors de la capture de l'empreinte corporelle, à se prémunir contre la fraude pratiquée par la technique de la fausse empreinte corporelle, et notamment de la technique dite du « faux doigt » dans le cas, le plus fréquent, de la capture d'une empreinte digitale. On connaît des solutions qui permettent de détecter une fraude de ce type (voir par exemple les documents FR 2 881 856 et FR 06 09629 au nom de la Demanderesse), ainsi que les documents WO 2006/093508 et US 6,292,576.

Un autre problème réside dans l'écart de positionnement, lors de la capture de l'empreinte corporelle, de la zone du corps porteuse de l'empreinte corporelle par rapport à la position, prise comme position de référence, adoptée lors d'une capture préalable d'enregistrement (étape dite d'enrôlement) ayant donné une image qui est tenue en mémoire. On connaît des solutions techniques qui, pour l'identification de l'individu, permettent la comparaison de l'image capturée de l'empreinte corporelle avec l'image mémorisée de l'empreinte corporelle, ces deux images n'étant pas strictement coïncidentes. Toutefois, un tel traitement des données est très complexe et long.

On pourrait certes envisager, pour résoudre ce problème, la présence d'un ou plusieurs repères sur la zone du corps sur laquelle l'empreinte doit être saisie. C'est ainsi que l'on pourrait prévoir le marquage de ladite zone du corps avec une ou plusieurs marques, visibles ou invisibles, telles que par exemple deux traits dans des positions mutuelles prédéterminées (par exemple parallèles). Cependant, il n'est pas envisageable de marquer le corps en pratiquant par exemple des incisions pour obtenir des marques inaltérables et l'on devrait se contenter d'un marquage par exemple à l'encre indélébile : l'inconvénient de cette solution réside dans la durée de vie limitée de ces marques et son application serait de peu d'étendue. On pourrait également envisager de détecter un petit nombre de points caractéristiques présents dans la zone du corps (par exemple des minuties et des deltas d'une empreinte digitale). Cependant, de tels repères sont trop imprécis et en outre nécessiteraient un traitement trop complexe et trop long des données pour leur exploitation.

Encore un autre problème se pose lorsqu'il s'agit d'identifier un individu par la comparaison de l'image capturée d'une empreinte corporelle saisie sur une zone de son corps avec les images mémorisées d'empreintes corporelles d'une collection renfermant un grand nombre d'images mémorisées d'empreintes corporelles. Cette sélection est longue du fait du grand nombre de données à traiter. Il est connu d'accélérer le processus en mettant en oeuvre un autre critère d'identification permettant d'effectuer une présélection plus rapide d'un nombre restreint d'images d'empreintes corporelles mémorisées parmi lesquelles est finalement menée la comparaison avec l'image capturée d'empreinte corporelle (voir par exemple le document FR 2 810 226 au nom de la Demanderesse).

D'après ce qui précède, on comprend que l'on connaît des dispositions techniques permettant de solutionner les problèmes ci-dessus évoqués. Toutefois, l'inconvénient des solutions actuellement connues réside dans le fait qu'elles sont appropriées pour traiter isolément un problème spécifique et que le traitement conjoint de tous les problèmes exposés implique la mise en oeuvre en parallèle des diverses solutions individuelles respectives. Cette issue n'est pas satisfaisante, notamment en raison de la multiplication des moyens à mettre en oeuvre, ainsi que du surcoût et éventuellement de la perte de vitesse de traitement (ou du gain insuffisant en vitesse de traitement) qui en résultent.

Au surplus, les solutions connues aujourd'hui pour le traitement des problèmes respectifs évoqués ont certes le mérite d'exister et de donner satisfaction sur le plan technique quant aux résultats obtenus, mais ils ne répondent pas de façon optimale aux exigences de rapidité de traitement des données et de coût (mise en oeuvre d'un minimum de moyens) .

Pour tenter de remédier aux inconvénients ci-dessus évoqués, il est connu d'avoir recours en outre à une capture du réseau veineux sous-jacent dans ladite zone du corps de l'individu. D'après le document WO 2006/043252, on connaît notamment une installation d'identification d'un individu par relevé d'une empreinte corporelle, notamment d'une empreinte digitale, dans une zone de son corps, cette installation comportant des moyens de capture par voie optique d'une image d'une empreinte corporelle, notamment d'une empreinte digitale, dans ladite zone du corps de l'individu, des moyens de capture par voie optique d'une image d'au moins une partie du réseau veineux dans ladite zone du corps de l'individu et sous-jacent à ladite empreinte corporelle, ladite installation comportant deux moyens d'éclairage propres à émettre respectivement deux faisceaux lumineux contenant respectivement deux rayonnements lumineux ayant deux longueurs d'ondes distinctes, et des moyens capteurs propres à capter les deux images en relation avec les longueurs d'ondes respectives.

Cependant, ce document ne donne aucune information concernant la structure d'une telle installation, alors que sont requises en pratique des installations aussi simples et aussi compactes que possible et dont le coût est aussi faible que possible.

En outre, l'installation connue précitée effectue un double contrôle biométrique à la fois avec la capture d'empreinte corporelle et avec la capture du réseau veineux sous-jacent. Or, une difficulté qui se présente lors d'une capture d'empreinte corporelle est que, lors de la capture en vue de l'identification de l'individu, la zone corporelle (par exemple l'extrémité d'un doigt) n'est pas exactement dans la même position que lors de la capture initiale d'enrôlement de l'individu. Il est donc nécessaire de repositionner l'image capturée par rapport à l'image mémorisée. Le document WO 2006/043252 n'évoque pas ce problème et par conséquent ne propose aucune solution.

L'invention a donc pour objet de répondre à ces besoins de la pratique et de proposer une solution qui permette de donner satisfaction pour la résolution des problèmes mentionnés plus haut, de manière à réduire les coûts des moyens mis en oeuvre, à simplifier la mise en correspondance de l'image capturée et de l'image mémorisée et donc, au moins dans une certaine mesure, à accélérer le traitement des données.

A ces fins, selon un premier de ses aspects, l'invention propose une installation d'identification d'un individu par relevé d'une empreinte corporelle, notamment d'une empreinte digitale, dans une zone de son corps, cette installation comportant des moyens de capture par voie optique d'une image d'une empreinte corporelle, notamment d'une empreinte digitale, dans ladite zone du corps de l'individu, des moyens de capture par voie optique d'une image d'au moins une partie du réseau veineux dans ladite zone du corps de l'individu et sous-jacent à ladite empreinte corporelle, ladite installation comportant deux moyens d'éclairage propres à émettre respectivement deux faisceaux lumineux contenant respectivement deux rayonnements lumineux ayant deux longueurs d'ondes distinctes, et des moyens capteurs propres à capter les deux images en relation avec les longueurs d'ondes respectives, laquelle installation, étant agencée conformément à l'invention, se caractérise en ce qu'elle comporte :
- un élément optique prismatique ayant une grande face dont au moins une partie constitue une région d'apposition d'une zone du corps d'un individu,
- des premiers moyens d'éclairage propres à émettre un premier rayonnement lumineux ayant une première longueur d'onde étant disposés en regard d'une première face latérale inclinée dudit élément optique prismatique de manière telle que le premier rayonnement émis par lesdits premiers moyens d'éclairage traverse l'élément optique prismatique pour parvenir sur la susdite région d'apposition sous un angle d'incidence propre à la réflexion totale,
- un premier capteur sensible audit premier rayonnement étant disposé en regard d'une seconde face latérale inclinée dudit élément optique prismatique opposée à la susdite première face latérale inclinée de manière à recevoir le premier rayonnement réfléchi par la grande face de l'élément optique prismatique et véhiculant une image de l'empreinte corporelle lorsqu'une zone du corps d'un individu est appliquée sur ladite région d'apposition,
- des seconds moyens d'éclairage propres à émettre un second rayonnement lumineux ayant une seconde longueur d'onde étant disposés en regard d'une petite face de l'élément optique prismatique de manière telle que le second rayonnement émis par lesdits seconds moyens d'éclairage traverse l'élément optique prismatique pour parvenir sur la susdite région d'apposition sensiblement perpendiculairement à celle-ci et propre à pénétrer dans la zone du corps lorsqu'une zone du corps d'un individu est appliquée sur ladite région d'apposition, et
- ledit second capteur sensible audit second rayonnement étant disposé en regard de ladite petite face de l'élément optique prismatique de manière à recevoir le second rayonnement réfléchi véhiculant une image d'au moins une partie du réseau veineux sous-jacent lorsqu'une zone du corps d'un individu est appliquée sur ladite région d'apposition.

Une installation conforme à l'invention est de conception simple et peut être réalisée de manière compacte, de sorte qu'elle est apte à répondre aux attentes de la pratique en matière de moindre encombrement et de facilité de mise en place, ainsi que de moindre coût.

Il est alors avantageux que l'élément optique prismatique soit allongé de manière telle que le premier rayonnement lumineux subisse des réflexions multiples avant de parvenir à ladite seconde face latérale inclinée.

De préférence, pour réduire la durée de la double capture, on prévoit que les moyens de capture par voie optique d'une image de ladite empreinte corporelle dans une zone du corps de l'individu et les moyens de capture par voie optique d'une image d'au moins une partie du réseau veineux dans la zone du corps de l'individu soient commandés simultanément.

L'invention est fondée sur le fait connu que certains rayonnements électromagnétiques (le proche infrarouge notamment) traversent les tissus, mais sont réfléchis par l'hémoglobine. Il est donc possible, en mettant en oeuvre un éclairage approprié à la fois par la longueur d'onde et par son incidence, de relever une cartographie du réseau veineux sous-cutané dans une zone prédéterminée du corps d'un individu. En pratique toutefois, dans le cadre de l'invention, un relevé complet ou tout au moins important du réseau veineux sous-cutané est inutile : il suffit d'identifier quelques points caractéristiques du réseau veineux de manière à générer un système de repérage définissant une ligne, ou de préférence deux lignes de repérage non nécessairement sensiblement parallèles, propre à permettre un recalage de la position de la zone du corps soumise au processus de capture d'empreinte corporelle par rapport à la position de cette même zone du corps lors de l'étape d'enrôlement.

On soulignera également que la cartographie du réseau veineux n'est pas exploitée, dans le contexte de la présente invention, en tant que critère fondamental d'identification de l'individu au même titre que l'image de l'empreinte corporelle et en parallèle avec celle-ci. Il ne s'agit donc pas, dans le contexte de l'invention, de procéder à une identification fondée sur deux critères traités en parallèle. La cartographie du réseau veineux est simplement exploitée en tant que critère auxiliaire d'exploitation propre à faciliter le traitement de l'image de l'empreinte corporelle qui demeure le critère unique d'identification.

Dans un exemple concret de réalisation, une longueur d'onde est située dans le rouge (de l'ordre de 650 nm) pour la capture de l'image de l'empreinte corporelle et l'autre longueur d'onde est située dans le proche infrarouge (de l'ordre de 950 nm) pour la capture du réseau veineux.

Un premier exemple de réalisation de l'installation exposée ci-dessus se caractérise en ce qu'il comporte :
- des moyens de mémorisation dans lesquels est tenu en mémoire au moins un couple de données formé de données mémorisées extraites de l'image de l'empreinte corporelle de la zone du corps de l'individu et de données mémorisées extraites de l'image du réseau veineux de la zone du corps de l'individu, lesquelles données sont capturées lors d'une étape préliminaire d'enregistrement (enrôlement) alors que la zone du corps occupe une position qui est prise comme position de référence,
- des premiers moyens comparateurs propres à comparer des données extraites de l'image capturée du réseau veineux de la zone du corps de l'individu, capturées et mémorisées lors d'une étape ultérieure d'identification d'un individu, avec les données mémorisées dudit réseau veineux et en déduire la position actuelle de la zone du corps par rapport à la position de référence préalablement déterminée, et
- des seconds moyens comparateurs propres à comparer des données extraites de l'image capturée de l'empreinte corporelle de la zone du corps de l'individu, capturées et mémorisées lors de ladite étape ultérieure d'identification de l'individu, avec les données extraites de l'image mémorisée de l'empreinte corporelle, lesdits seconds moyens comparateurs étant placés sous la dépendance desdits premiers moyens comparateurs pour tenir compte de la position de la zone du corps par rapport à sa position de référence.

Un deuxième exemple de réalisation de l'installation exposée ci-dessus se caractérise en ce qu'il comporte :
- des moyens de mémorisation dans lesquels sont tenus en mémoire des couples de données formés de données mémorisées extraites d'une image de l'empreinte corporelle de la zone du corps et de données mémorisées extraites d'une image du réseau veineux de la zone du corps de chaque individu d'un groupe d'individus, lesquelles données sont capturées et mémorisées lors d'une étape préliminaire d'enregistrement (enrôlement) alors que la zone du corps occupe, pour chaque individu, une position qui est prise comme position de référence,
- des troisièmes moyens comparateurs propres à comparer, lors d'une étape ultérieure d'identification d'un individu, des données extraites de l'image capturée du réseau veineux de la zone du corps d'un individu, capturées lors d'une étape ultérieure d'identification de l'individu, avec les données extraites des images mémorisées de réseaux veineux du groupe d'individus et identifier celles des données mémorisées d'images de réseaux veineux du groupe d'individus qui sont identiques aux données capturées de l'image du réseau veineux de l'individu,
- des premiers moyens comparateurs propres à comparer, lors de ladite étape ultérieure d'identification d'un individu, les données capturées de l'image du réseau veineux de l'individu avec chacune des susdites données mémorisées identifiées d'images de réseau veineux du groupe d'individus et en déduire dans chaque cas la position actuelle de la zone du corps par rapport à la position de référence préalablement déterminée, et
- des seconds moyens comparateurs propres à comparer, lors de ladite étape ultérieure d'identification d'un individu, les données capturées extraites de l'image de l'empreinte corporelle de l'individu avec chacune des données mémorisées d'empreintes corporelles associées respectivement auxdites données mémorisées identifiées d'images de réseau veineux du groupe d'individus, lesdits seconds moyens comparateurs étant placés sous la dépendance desdits premiers moyens comparateurs pour tenir compte dans chaque cas de la position de la zone du corps par rapport à sa position de référence.

Un troisième exemple de réalisation de l'installation exposée ci-dessus se caractérise en ce qu'il comporte :
- des moyens de mémorisation dans lesquels est tenu en mémoire au moins un couple de données formé de données mémorisées extraites de l'image de l'empreinte corporelle de la zone du corps de l'individu et de données mémorisées extraites de l'image du réseau veineux de la zone du corps de l'individu, lesquelles données sont capturées lors d'une étape préliminaire d'enregistrement (enrôlement) alors que la zone du corps occupe une position qui est prise comme position de référence,
- des moyens comparateurs propres à comparer des données extraites de l'image capturée du réseau veineux de la zone du corps de l'individu, capturées lors d'une étape ultérieure d'identification d'un individu, avec les données mémorisées dudit réseau veineux et en déduire la position actuelle de la zone du corps par rapport à la position de référence préalablement déterminée, et
- des moyens correcteurs placés sous la dépendance desdits moyens comparateurs et propres à corriger des données extraites de l'image capturée de l'empreinte corporelle de la zone du corps de l'individu, capturées lors de ladite étape ultérieure, en tenant compte de la position actuelle de la zone du corps par rapport à sa position de référence.

Selon un second de ses aspects, l'invention propose un procédé d'identification d'un individu propre à être mis en oeuvre par le premier exemple précité de réalisation de l'installation conforme à l'invention, lequel procédé comprend les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu,
   caractérisé
- en ce que, au cours d'une étape préliminaire d'enregistrement (enrôlement) d'un individu, on capture dans une zone du corps de chaque individu et on tient en mémoire un couple de données formé par des données mémorisées extraites de l'image de l'empreinte corporelle et des données mémorisées extraites de l'image du réseau veineux, la zone du corps occupant une position qui est prise comme position de référence,
- puis en ce que, ultérieurement au cours d'une étape d'identification de l'individu,
   . on capture dans la zone du corps de l'individu une image de l'empreinte corporelle et une image du réseau veineux,
   . on compare d'abord des données extraites de l'image capturée du réseau veineux avec les données mémorisées dudit réseau veineux,
   . on en déduit la position actuelle de la zone du corps par rapport à la position de référence préalablement déterminée, et
   . on compare des données extraites de l'image capturée de l'empreinte corporelle avec les données mémorisées de l'empreinte corporelle en tenant compte de la position de la zone du corps par rapport à sa position de référence.

L'invention propose également un procédé d'identification d'un individu propre à être mis en oeuvre par le deuxième exemple précité de réalisation de l'installation conforme à l'invention, lequel procédé comprend les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu,
   caractérisé
- en ce que, au cours d'une étape préliminaire d'enregistrement (enrôlement) d'un groupe d'individus, on capture dans une zone du corps de chaque individu et on tient en mémoire un couple de données formé de données mémorisées extraites de l'image de l'empreinte corporelle et de données mémorisées extraites de l'image du réseau veineux,
- puis en ce que, ultérieurement au cours d'une étape d'identification d'un individu,
   - on capture dans la zone du corps de l'individu des données extraites de l'image de l'empreinte corporelle et des données extraites de l'image du réseaux veineux,
   - on compare les données capturées du réseau veineux de l'individu avec les données mémorisées de réseaux veineux des individus du groupe d'individus,
   - on sélectionne les données mémorisées de réseaux veineux qui sont identiques auxdites données capturées du réseau veineux, et
   - pour celles des données mémorisées d'empreintes corporelles qui sont couplées auxdites données mémorisées de réseau veineux qui ont été sélectionnées, on compare les données capturées du réseau veineux avec les données mémorisées sélectionnées dudit réseau veineux, on en déduit la position actuelle de la zone du corps par rapport à la position de référence préalablement déterminée, et on compare les données capturées de l'empreinte corporelle avec les données mémorisées de l'empreinte corporelle associées aux données mémorisées sélectionnées dudit réseau veineux en tenant compte de la position de la zone du corps par rapport à sa position de référence.

L'invention propose encore un procédé d'identification d'un individu propre à être mis en oeuvre par le troisième exemple précisé de réalisation de l'installation conforme à l'invention, lequel procédé comprend les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu,
   caractérisé
- en ce que, au cours d'une étape préliminaire d'enregistrement (enrôlement) d'un individu, on capture dans une zone du corps de chaque individu et on tient en mémoire un couple de données formé par des données mémorisées extraites de l'image de l'empreinte corporelle et des données mémorisées extraites de l'image du réseau veineux, la zone du corps occupant une position qui est prise comme position de référence,
- puis en ce que, ultérieurement au cours d'une étape de relevé de l'empreinte corporelle de l'individu,
   - on capture une image de l'empreinte corporelle et une image du réseau veineux dans la zone du corps de l'individu,
   - on compare des données extraites de l'image capturée du réseau veineux avec les données mémorisées dudit réseau veineux,
   - on en déduit la position actuelle de la zone du corps par rapport à la position de référence préalablement déterminée, et
   - on repositionne des données extraites de l'image capturée de l'empreinte corporelle en tenant compte de la position actuelle de la zone du corps par rapport à sa position de référence.

Dans un mode de mise en oeuvre préféré de l'un des trois procédés ci-dessus, on capture simultanément l'image de l'empreinte corporelle et l'image du réseau veineux, de manière à réduire au minimum la durée de la double capture.

De façon pratique, on éclaire la zone du corps avec deux rayonnements lumineux respectifs ayant deux longueurs d'ondes distinctes et on capte les deux images en relation avec les longueurs d'ondes respectives ; de façon pratique, pour la capture de l'image de l'empreinte corporelle, la zone du corps est éclairée avec un rayonnement ayant une longueur d'onde située dans le rouge (typiquement de l'ordre de 650 nm) et, pour la capture du réseau veineux, la zone du corps est éclairée avec un rayonnement ayant une longueur d'onde située dans le proche infrarouge (typiquement de l'ordre de 950 nm).

L'invention sera mieux comprise à la lecture de la description détaillée qui suit de certains modes de mise en oeuvre et de réalisation préférés donnés uniquement à titre d'exemples non limitatifs. Dans cette description, on se réfère aux dessins annexés sur lesquels :

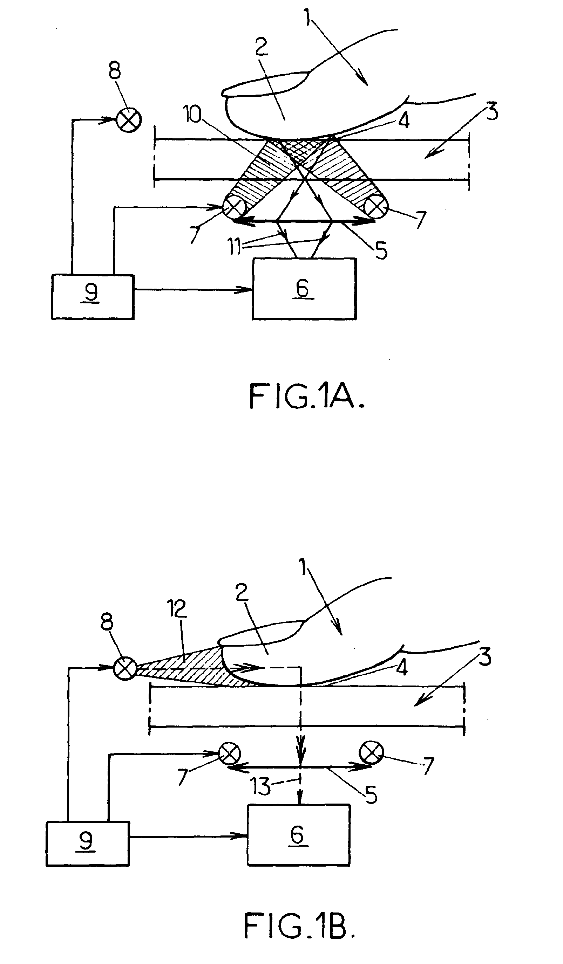

- les figures 1A et 1B sont des vues très schématiques d'un premier mode de réalisation possible d'une partie d'une installation d'identification d'un individu par relevé d'une empreinte corporelle d'une zone de son corps, notamment d'une empreinte digitale, montrée respectivement dans deux situations fonctionnelles différentes ;

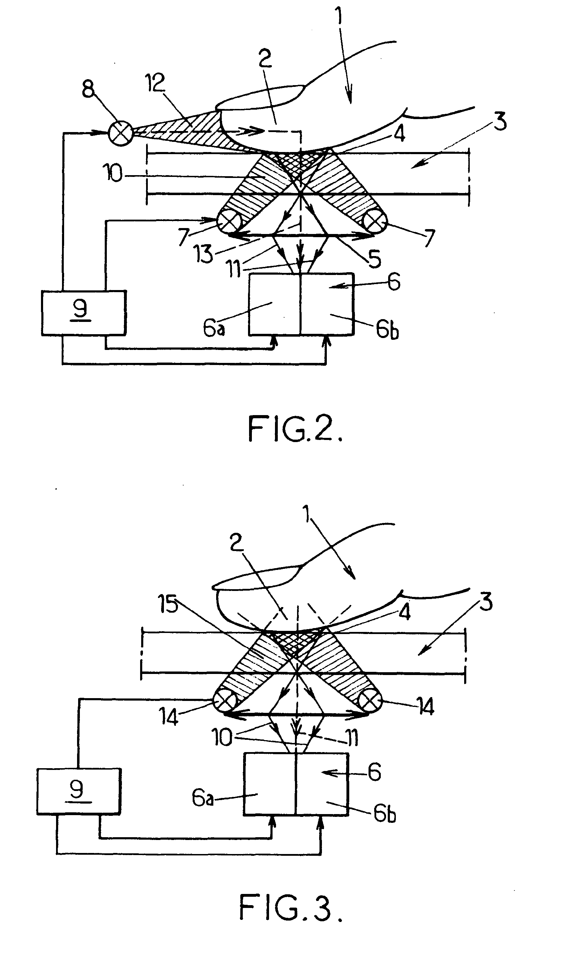

- la figure 2 est une vue très schématique d'une variante du premier mode de réalisation des figures 1A et 1B ;
- la figure 3 est une vue très schématique d'une variante de l'agencement de la figure 2 ;

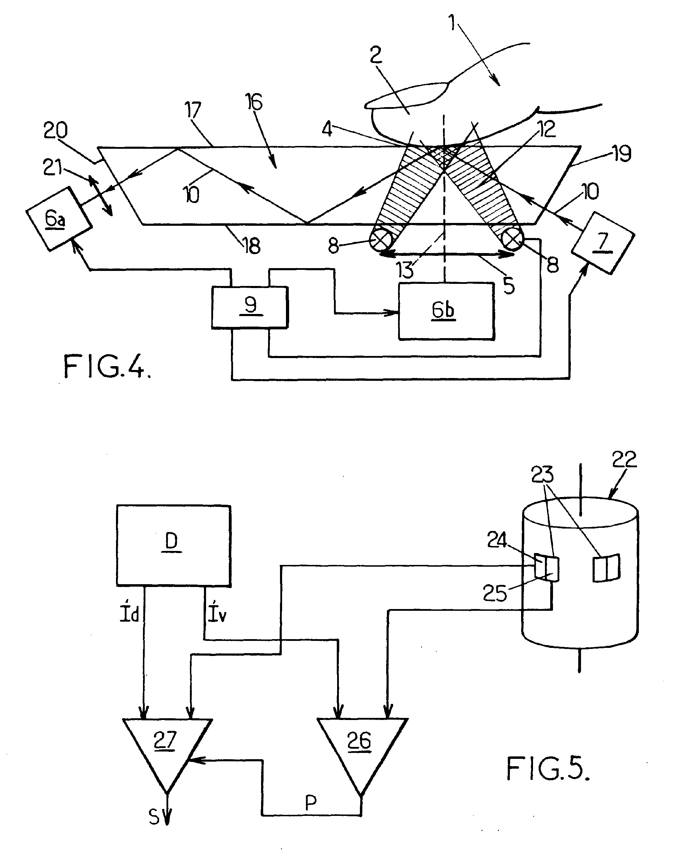

- la figure 4 est une vue très schématique d'un mode de réalisation préféré d'une partie d'une installation d'identification d'un individu par relevé d'une empreinte corporelle d'une zone de son corps, notamment d'une empreinte digitale, agencée conformément à l'invention ;
- la figure 5 est une vue très schématique d'un premier exemple de réalisation d'une installation d'identification d'un individu par relevé d'une empreinte corporelle d'une zone de son corps, notamment d'une empreinte digitale, mettant en oeuvre l'agencement de la figure 4 conformément à l'invention ;

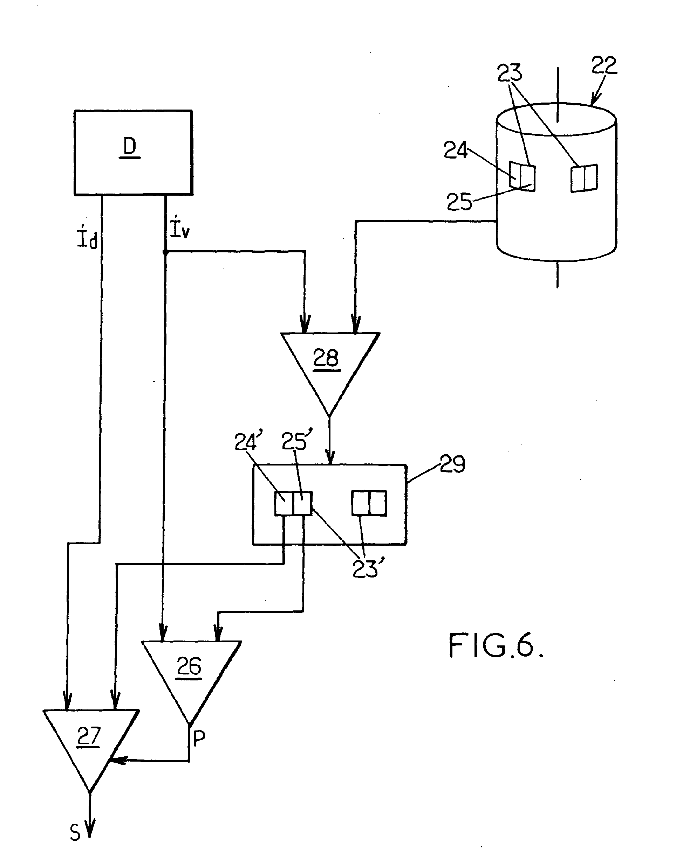

- la figure 6 est une vue très schématique d'un deuxième exemple de réalisation d'une installation d'identification d'un individu par relevé d'une empreinte corporelle d'une zone de son corps, notamment d'une empreinte digitale, mettant en oeuvre l'agencement de la figure 4 conformément à l'invention ; et

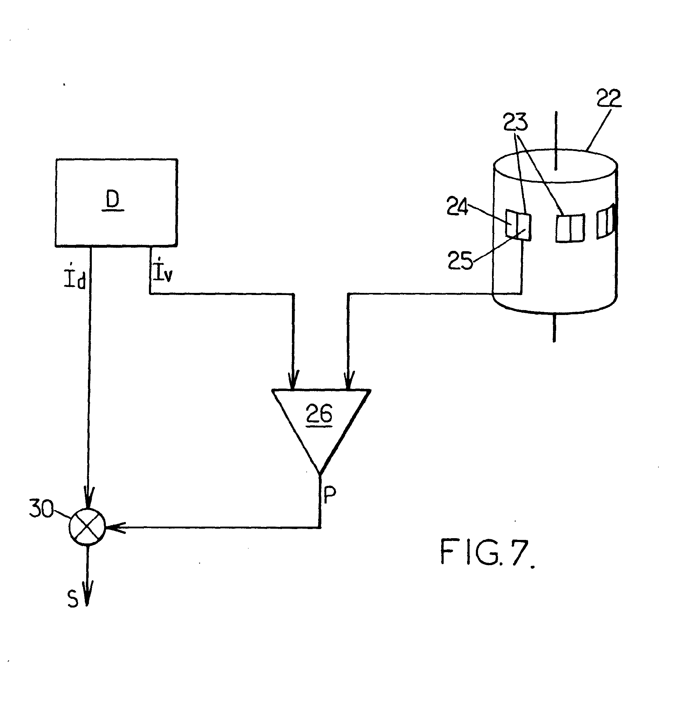

- la figure 7 est une vue très schématique d'un exemple de réalisation d'une installation de relevé d'une empreinte corporelle d'une zone de son corps, notamment d'une empreinte digitale, mettant en oeuvre l'agencement de la figure 4 conformément à l'invention et pouvant être utilisée notamment, bien que non exclusivement, pour l'identification d'un individu.

Aux figures 1A et 1B est illustrée très schématiquement une partie d'une installation adaptée pour l'identification d'un individu par relevé d'une empreinte corporelle d'une zone de son corps, notamment d'une empreinte digitale. Cette partie peut être considérée comme constituant un dispositif d'obtention d'une image d'une empreinte corporelle d'une zone 1 du corps d'un individu, en l'occurrence d'une empreinte digitale de la première phalange 2 d'un doigt d'une de ses mains.

Le dispositif comporte, d'une façon classique, des moyens de capture par voie optique d'une image de ladite empreinte corporelle prise dans une zone du corps de l'individu. S'agissant concrètement de la capture d'une empreinte digitale, la zone du corps est par exemple la première phalange 2 d'un doigt d'une main.

Le dispositif comporte également des moyens de capture par voie optique d'une image d'au moins une partie du réseau veineux dans la même zone du corps de l'individu.

Comme illustré aux figures 1A et 1B, le dispositif comporte une plaque 3 qui est au moins en partie transparente pour les rayonnements électromagnétiques utilisés (typiquement en verre ou analogue) de manière à constituer une zone 4 d'apposition de la zone 1 du corps (ici de la première phalange d'un doigt d'une main) de l'individu sur laquelle doit être captée l'empreinte corporelle.

Sous la plaque 3 sont disposés une lentille 5 de focalisation et des moyens capteurs 6 propres à détecter deux rayonnements électromagnétiques ayant des longueurs d'ondes distinctes, soit que les capteurs utilisés sont sensibles à ces deux longueurs d'ondes, soit qu'il est prévu un double réseau de capteurs sensibles respectivement aux deux longueurs d'ondes.

Des premiers moyens d'éclairage 7 (par exemple sous forme de diodes LED) sont placés autour de la lentille 5 et disposés pour éclairer approximativement frontalement la zone 1 du corps placée au contact de la zone 4 d'apposition de la plaque 3. Les premiers moyens d'éclairage 7 émettent un premier faisceau lumineux 10 comprenant un rayonnement ayant une première longueur d'onde, typiquement dans le rouge, par exemple avec une longueur d'onde de l'ordre de 650 nm. On a représenté en trait plein le rayonnement réfléchi 11 véhiculant les informations optiques de l'empreinte corporelle.

Des seconds moyens d'éclairage 8 (par exemple sous forme de diodes LED) sont disposés de manière à éclairer latéralement la zone 1 du corps appliquée sur la zone 4 d'apposition de la plaque 3. Les seconds moyens d'éclairage 8 émettent un second faisceau lumineux 12 comprenant un rayonnement ayant une seconde longueur d'onde telle que le rayonnement soit propre à traverser les tissus, mais soit réfléchi par l'hémoglobine, autrement dit par le réseau veineux. Typiquement, cette longueur d'onde est située dans le proche infrarouge, et est par exemple de l'ordre de 950 nm. On a représenté en tirets le rayonnement réfléchi 13 véhiculant l'information optique du réseau veineux.

Des moyens de commande (microcontrôleur) 9 pilotent les moyens capteurs 6 et les moyens d'éclairage 7, 8 de manière que deux étapes consécutives, l'une avec les premiers moyens d'éclairage 7 (figure 1A) et la seconde avec les seconds moyens d'éclairage 8 (figure 1B), soient effectuées pour capturer successivement les deux images requises (image de l'empreinte corporelle et image du réseau veineux sous-cutané). Ces deux étapes doivent être suffisamment brèves (par exemple n'excédant pas 1 seconde) pour que, d'une part, l'individu puisse sans difficulté maintenir immobilisée, sur la plaque 3, la zone 1 du corps sur laquelle est effectuée la double capture et pour que, d'autre part, une substitution frauduleuse ne puisse pas être effectuée entre les deux captures.

La figure 2 illustre plus particulièrement une configuration spécifique de l'agencement des figures 1A et 1B dans lequel les moyens capteurs 6 sont constitués par un double réseau de capteurs sensibles respectivement aux deux rayonnements ayant des longueurs d'ondes différentes. Sur la figure 2, pour la simplicité de la représentation cette configuration est schématisée sous forme d'un bloc 6 formé par la juxtaposition de deux sous-blocs 6a, 6b correspondant respectivement aux deux types de capteurs, étant entendu qu'en pratique il s'agit d'un réseau formé de paires de capteurs respectivement des deux types. On peut alors envisager que les moyens de commande 9 déclenchent les moyens d'éclairage 7 et 8 simultanément de telle sorte que les deux captures des deux images respectivement de l'empreinte corporelle et du réseau veineux sous-cutané aient lieu simultanément ; les capteurs individuels des moyens capteurs 6 traitent sélectivement le rayonnement auquel ils sont sensibles : par exemple, les premiers capteurs 6a traitent le premier rayonnement ayant la première longueur d'onde, tandis que les seconds capteurs 6b traitent le second rayonnement ayant la seconde longueur d'onde.

A la figure 3 est illustrée schématiquement une variante de réalisation des dispositions exposées ci-dessus en regard de la figure 2. Cette variante de réalisation fait appel, non plus à des premiers et seconds moyens d'éclairage 7 et 8 physiquement distincts pour émettre les deux rayonnements précités, mais à des moyens d'éclairage 14 uniques qui sont propres à émettre un faisceau unique 15 incluant les deux longueurs d'ondes requises. Il peut s'agir, par exemple, d'une source lumineuse émettant un rayonnement couvrant une plage prédéterminée de longueurs d'ondes à laquelle on associe des moyens de filtrage propres à isoler deux rayonnements ayant respectivement les deux longueurs d'ondes requises ; il peut aussi s'agir, par exemple, d'une source lumineuse (par exemple sous forme de diodes LED) propre à émettre un double rayonnement lumineux calé sur deux longueurs d'ondes prédéterminées. Le fonctionnement reste identique à ce qui a été décrit plus haut, le mode de fonctionnement le mieux approprié consistant à effectuer des captures simultanées en mettant en oeuvre conjointement deux types de capteurs 6a, 6b sensibles respectivement aux deux longueurs d'ondes.

On va maintenant décrire, en regard de la figure 4, une installation concrète conforme à l'invention qui fait appel à deux sources d'éclairage distinctes respectivement pour les deux longueurs d'ondes requises. Sur la figure 4, on utilisera les mêmes références numériques qu'aux figures 1A, 1B et 2 pour désigner les éléments ou parties identiques ou analogues.

L'agencement illustré à la figure 4 met en oeuvre un élément optique prismatique 16 (ci-après dénommé le prisme) se présentant sous forme d'une plaque transparente, par exemple en verre, ayant deux faces principales, respectivement une face principale 17 supérieure et une face inférieure 18. Les deux faces 17, 18 sont avantageusement parallèles de manière à simplifier le fonctionnement du dispositif. De plus, le prisme 16 comporte deux faces de bout respectivement 19, 20 qui sont inclinées et tournées vers le bas (sur le dessin), de sorte que la face principale 17 supérieure est plus grande que la face principale 18 inférieure. Ainsi, dans son ensemble, le prisme 16 présente une section en trapèze. Au moins en partie, la face principale 17 supérieure constitue la susdite zone 4 d'apposition de la zone 1 du corps, ici d'un doigt, de l'individu sur laquelle doit être captée l'empreinte corporelle.

En regard de la face inclinée 19 proche de la zone 4 d'apposition de la zone 1 du corps sont disposés les premiers moyens d'éclairage 7 qui émettent un premier rayonnement 10 ayant une première longueur d'onde, typiquement de l'ordre de 650 nm (rouge). Le rayonnement 10 est dirigé sensiblement perpendiculairement à la face inclinée 19 (face inclinée d'entrée) de l'élément optique prismatique 16 de sorte qu'il ne subit pas de déviation sensible lors de sa pénétration dans l'élément optique prismatique 16. Le rayonnement 10 parvient sur la face principale 17 supérieure avec une incidence propre à entraîner sa réflexion totale aux emplacements où des parties de la zone 1 du corps (crêtes de l'empreinte corporelle) sont physiquement au contact de la zone 4 d'apposition, tandis qu'aux emplacements où aucune partie de la zone 1 du corps n'est en contact physique sur la zone 4 d'apposition (sillons de l'empreinte corporelle) le rayonnement ne subit aucune réflexion. Le rayonnement lumineux 10 véhiculant l'information de l'image de l'empreinte corporelle subit, à l'intérieur de l'élément optique prismatique 16, des réflexions totales multiples jusqu'à parvenir sensiblement perpendiculairement sur la face inclinée 20 (face inclinée de sortie) de l'élément optique prismatique 16. Sortant de l'élément optique prismatique 16, le faisceau lumineux 10 parvient, à travers une optique de focalisation 21, aux moyens capteurs 6a appropriés à la détection du premier rayonnement ayant la première longueur d'onde et qui recueillent l'image de l'empreinte corporelle (les crêtes de l'empreinte corporelle étant claires, tandis que les sillons de l'empreinte corporelle sont sombres).

En regard de la face principale 18 inférieure et sensiblement au droit de la zone 4 d'apposition sont disposés des seconds moyens d'éclairage 8 qui émettent un second rayonnement 12 ayant une seconde longueur d'onde, typiquement de l'ordre de 950 nm (proche infrarouge). Le rayonnement 12 traverse l'élément optique prismatique 16 et pénètre dans la zone 1 du corps à l'intérieur de laquelle il subit une réflexion sur les parties chargées en hémoglobine (en pratique sur les veines). Le rayonnement réfléchi 13 (en tirets sur la figure 4) est dirigé sensiblement perpendiculairement aux faces principales 17, 18 de l'élément optique prismatique 16 et parvient à travers l'optique de focalisation 5, sur les moyens capteurs 6b appropriés à la détection du second rayonnement ayant la seconde longueur d'onde et qui recueillent l'image du réseau veineux sous-jacent à l'empreinte corporelle.

Les captures des deux images peuvent de préférence être simultanées et les moyens de commande (microcontrôleur) 9 assurent les déclenchements appropriés des moyens d'éclairage et la synchronisation des moyens capteurs.

On soulignera ici que la mise en oeuvre de l'invention ne nécessite pas la connaissance complète de la totalité du réseau veineux et que la connaissance de seulement un petit nombre de points du réseau veineux peut suffire pour constituer le référentiel requis pour le traitement de l'image de l'empreinte corporelle détectée par les premiers moyens capteurs. De ce fait, dans le contexte de l'invention, l'expression « image du réseau veineux » doit être comprise comme désignant une image incorporant quelques points ou parties du réseau veineux suffisants en nombre et en positions relatives pour constituer un référentiel propre notamment à déterminer l'orientation de la zone du corps (pour corriger un décalage de positionnement) et l'homothétie (pour tenir compte de l'écrasement de la zone du corps appliquée contre la zone d'apposition).

De même, le processus d'identificaticn de l'individu par capture d'une empreinte corporelle de celui-ci ne nécessite pas la connaissance complète de la totalité de l'empreinte corporelle et la connaissance d'un certain nombre de points caractéristiques de l'empreinte corporelle peut suffire à assurer cette identification.

Aussi, pour la mise en oeuvre pratique de l'invention, on utilise seulement des données extraites de l'image de l'empreinte corporelle et des données extraites de l'image du réseau veineux toutes deux capturées sur l'individu.

Comme cela a déjà été précisé plus haut, il reste cependant acquis que les données extraites de l'image capturée du réseau veineux sont essentiellement destinées à aider au traitement des données extraites de l'image capturée de l'empreinte corporelle.

On va maintenant donner, en relation respectivement avec les figures 5 à 7, des exemples de mise en oeuvre pratique de l'installation conforme à l'invention qui vient d'être décrite.

A la figure 5 est illustrée de façon schématique, sous forme de schéma blocs, un premier exemple d'agencement d'une installation d'identification d'un individu par relevé d'une empreinte corporelle d'une zone de son corps, notamment d'une empreinte digitale. Cette installation comporte des moyens 22 de mémorisation dans lesquels sont tenus en mémoire des couples 23 de données formés chacun de données 24 mémorisées extraites de l'image de l'empreinte corporelle de la zone du corps de l'individu et de données 25 mémorisée extraites de l'image du réseau veineux de la zone du corps de l'individu ; ces couples de données sont capturés et mis en mémoire au cours d'une étape préliminaire d'enregistrement (enrôlement) d'un individu en utilisant un dispositif conforme à l'invention comme décrit précédemment, la zone du corps occupant alors une position qui est prise comme position de référence.

Pour permettre l'identification de l'individu au cours d'une procédure ultérieure, l'installation comporte un dispositif de capture d'une image de l'empreinte corporelle de la zone du corps de l'individu et d'une image du réseau veineux de la zone du corps de l'individu, ledit dispositif désigné par la référence D étant agencé conformément à l'invention comme décrit précédemment.

Des premiers moyens comparateurs 26 sont prévus dans l'installation
- pour recevoir des données Iv extraites de l'image capturée du réseau veineux délivrées par le dispositif D et les données 25 mémorisées dudit réseau veineux tenues en mémoire dans les moyens 22 de mémorisation,
- pour comparer lesdites données Iv extraites de l'image capturée du réseau veineux avec lesdites données 25 mémorisées dudit réseau veineux, et
- pour en déduire la position actuelle (lors de l'apposition de la zone 1 corporelle sur la zone 4 d'apposition) de la zone du corps par rapport à la position de référence préalablement déterminée et mémorisée (signal de sortie P).

Enfin, des seconds moyens 27 comparateurs sont prévus dans l'installation
- pour recevoir des données Id extraites de l'image capturée de l'empreinte corporelle délivrée par le dispositif D et les données 24 mémorisées de l'empreinte corporelle tenues en mémoire dans les moyens 22 de mémorisation,
- pour recevoir le susdit signal de sortie P délivré par les premiers moyens comparateurs,
- pour comparer lesdites données Id extraites de l'image capturée de l'empreinte corporelle avec lesdites données 24 mémorisées de l'empreinte corporelle en tenant compte de l'information de positionnement de la zone du corps par rapport à sa position de référence fournie par les premiers moyens 26 comparateurs, et
- pour délivrer en S un signal représentatif du résultat de la comparaison, notamment une validation ou une invalidation (par exemple une confirmation ou une non confirmation d'identité, un accord ou un refus d'accès, ...).

Un procédé d'identification d'un individu, propre à être mis en oeuvre à l'aide du premier exemple d'agencement d'installation ci-dessus, comprend les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu.

Ledit procédé se caractérise alors en ce que :
- au cours d'une étape préliminaire d'enregistrement (enrôlement) d'un individu, on capture dans une zone du corps de chaque individu et on tient en mémoire un couple de données formé par des données mémorisées extraites de l'image de l'empreinte corporelle et des données mémorisées extraites de l'image du réseau veineux, la zone du corps occupant une position qui est prise comme position de référence,
- puis, ultérieurement au cours d'une étape d'identification de l'individu,
   - on capture dans la zone du corps de l'individu une image de l'empreinte corporelle et une image du réseau veineux,
   - on compare d'abord des données extraites de l'image capturée du réseau veineux avec les données mémorisées dudit réseau veineux,
   - on en déduit la position actuelle de la zone du corps par rapport à la position de référence préalablement déterminée, et
   - on compare des données extraites de l'image capturée de l'empreinte corporelle avec les données mémorisées de l'empreinte corporelle en tenant compte de la position de la zone du corps par rapports sa position de référence.

Dans un deuxième exemple d'agencement, en addition au rôle qui vient d'être évoqué et qui est maintenu, les données extraites de l'image du réseau veineux peuvent également, de façon optionnelle, servir à améliorer, notamment à accélérer, le traitement des données extraites de l'image de l'empreinte corporelle aux fins d'identification d'un individu. En particulier, les données extraites de l'image du réseau veineux peuvent être utilisées pour effectuer un tri préalable rapide, cette fonction reposant sur le fait que la comparaison de données caractéristiques de l'image du réseau veineux capturée sur l'individu avec celles tenues en mémoire est plus simple, et donc plus rapide, que la comparaison de données caractéristiques des images d'empreintes corporelles.

A cet effet, à la figure 6 est illustré de façon schématique, sous forme de schéma blocs, un deuxième exemple d'agencement d'une installation appropriée pour accélérer le processus d'identification d'un individu par relevé d'une empreinte corporelle d'une zone de son corps, notamment d'une empreinte digitale. Cette installation comporte des moyens 22 de mémorisation dans lesquels sont tenus en mémoire des couples 23 de données formés de données 24 mémorisées extraites d'une image de l'empreinte corporelle d'une zone du corps et de données 25 mémorisées extraites d'une image du réseau veineux de la zone du corps de chaque individu d'un groupe d'individus, lesquelles données sont capturées et mémorisées lors d'une étape préliminaire d'enregistrement (enrôlement) en utilisant un dispositif conforme à l'invention comme décrit précédemment alors que la zone du corps occupe, pour chaque individu, une position qui est prise comme position de référence.

Pour permettre ultérieurement l'identification de l'individu, l'installation comporte un dispositif de capture d'une image de l'empreinte corporelle de la zone du corps de l'individu et d'une image du réseau veineux de la zone du corps de l'individu, ledit dispositif désigné par la référence D étant agencé conformément à l'invention comme décrit précédemment.

Des troisièmes moyens 28 comparateurs sont prévus pour, lors d'une étape ultérieure d'identification d'un individu,
recevoir des données Iv capturées extraites de l'image du réseau veineux de la zone du corps de l'individu délivrées par le dispositif D et successivement les données 25 extraites des images mémorisées des réseaux veineux des individus respectifs du groupe d'individus qui sont tenues en mémoire dans les moyens 22 de mémorisation,
comparer les données Iv capturées extraites de l'image du réseau veineux avec successivement lesdites données 25 extraites des images mémorisées desdits réseaux veineux des individus respectifs du groupe d'individus, et
identifier celles 25' des données mémorisées des réseaux veineux des individus du groupe d'individus qui sont identiques aux données Iv capturées extraites de l'image du réseau veineux de l'individu. Pour simplifier la compréhension de l'invention et faciliter la lecture du schéma de la figure 6, on suppose que les données 25' mémorisées extraites des images de réseaux veineux ainsi identifiées sont sélectionnées et stockées dans des moyens 29 de mémorisation provisoire ; mais cet agencement n'est pas indispensable et en pratique on pourra faire en sorte que les données mémorisées extraites des images de réseaux veineux ainsi identifiées soient simplement repérées d'une façon quelconque dans les moyens 22 de mémorisation.

En outre, l'installation est agencée comme décrit précédemment en regard de la figure 5.

A cet effet, on prévoit des premiers moyens comparateurs 26 pour recevoir les données Iv capturées extraites de l'image du réseau veineux de l'individu délivrées par le dispositif D et chacune des données 25' mémorisées de réseaux veineux sélectionnées dans les moyens 29 de mémorisation provisoire,
pour comparer les données Iv capturées extraites de l'image du réseau veineux de l'individu avec chacune des données 25' mémorisées de réseau veineux et pour en déduire la position actuelle (lors de l'apposition de la zone 1 corporelle de l'individu sur la zone 4 d'apposition) de la zone du corps de l'individu par rapport à la position de référence préalablement déterminée et mémorisée (signal de sortie P).

Enfin, des seconds moyens 27 comparateurs sont prévus dans l'installation
pour recevoir les données Id capturées extraites de l'image de l'empreinte corporelle de l'individu délivrée par le dispositif D et chacune des données 24' mémorisées de l'empreinte corporelle qui sont associées aux données 25' mémorisées de réseaux veineux,
pour recevoir le signal de sortie P délivré par les premiers moyens 26 comparateurs,
pour comparer les données Id capturées extraites de l'image de l'empreinte corporelle de l'individu avec chacune des données 24' mémorisées d'empreintes corporelles respectives en tenant compte à chaque fois de l'information de positionnement de la zone du corps de l'individu par rapport à sa position de référence fournie par les premiers moyens 26 comparateurs, et
pour délivrer en S des données corrigées déduites des données extraites de l'image capturée de l'empreinte corporelle de l'individu (par exemple, le résultat peut être constitué par un identifiant trouvé dans une base de donnés).

Un procédé d'identification d'un individu, propre à être mis en oeuvre à l'aide du deuxième exemple d'agencement d'installation ci-dessus, comprend les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu.

Ce procédé se caractérise en ce que :
- au cours d'une étape préliminaire d'enregistrement (enrôlement) d'un groupe d'individus, on capture dans une zone du corps de chaque individu et on tient en mémoire un couple de données formé de données mémorisées extraites de l'image de l'empreinte corporelle et de données mémorisées extraites de l'image du réseau veineux,
- puis, ultérieurement au cours d'une étape d'identification d'un individu,
   - on capture dans la zone du corps de l'individu des données extraites de l'image de l'empreinte corporelle et des données extraites de l'image du réseau veineux,
   - on compare les données capturées du réseau veineux de l'individu avec les données mémorisées de réseaux veineux des individus du groupe d'individus,
   - on sélectionne les données mémorisées de réseaux veineux qui sont identiques auxdites données capturées du réseau veineux, et
   - pour celles des données mémorisées d'empreintes corporelles qui sont couplées auxdites données mémorisées de réseau veineux qui ont été sélectionnées, on compare les données capturées du réseau veineux avec les données mémorisées sélectionnées dudit réseau veineux, on en déduit la position actuelle de la zone du corps par rapport à la position de référence préalablement déterminée, et on compare les données capturées de l'empreinte corporelle avec les données mémorisées de l'empreinte corporelle associées aux données mémorisées sélectionnées dudit réseau veineux en tenant compte de la position de la zone du corps par rapport à sa position de référence.

Enfin, à la figure 7 est illustré de façon schématique, sous forme de schéma blocs, un troisième exemple d'agencement d'une installation qui comporte :
- des moyens 22 de mémorisation dans lesquels est tenu en mémoire au moins un couple 23 de données formé de données 24 mémorisées extraites de l'image de l'empreinte corporelle de la zone du corps de l'individu et de données 25 mémorisées extraites de l'image du réseau veineux de la zone du corps de l'individu, lesquelles données sont capturées lors d'une étape préliminaire d'enregistrement (enrôlement) alors que la zone du corps occupe une position qui est prise comme position de référence,
- des moyens 26 comparateurs propres à comparer des données Iv extraites de l'image capturée du réseau veineux de la zone du corps de l'individu, capturées lors d'une étape ultérieure d'identification d'un individu, avec les données 25 mémorisées dudit réseau veineux et en déduire la position actuelle de la zone du corps par rapport à la position de référence préalablement déterminée, et
- des moyens 30 correcteurs placés sous la dépendance (signal P) desdits moyens 26 comparateurs et propres à corriger des données Id extraites de l'image capturée de l'empreinte corporelle de la zone du corps de l'individu, capturées lors de ladite étape ultérieure, en tenant compte de la position actuelle de la zone du corps par rapport à sa position de référence.

Un procédé d'identification d'un individu, propre à être mis en oeuvre à l'aide du troisième exemple d'agencement d'installation ci-dessus, comprend les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- son traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu.

Ce procédé se caractérise en ce que :
- au cours d'une étape préliminaire d'enregistrement (enrôlement) d'un individu, on capture dans une zone du corps de chaque individu et on tient en mémoire un couple de données formé par des données mémorisées extraites de l'image de l'empreinte corporelle et des données mémorisées extraites de l'image du réseau veineux, la zone du corps occupant une position qui est prise comme position de référence,
- puis, ultérieurement au cours d'une étape de relevé de l'empreinte corporelle de l'individu,
   - on capture une image de l'empreinte corporelle et une image du réseau veineux dans la zone du corps de l'individu,
   - on compare des données extraites de l'image capturée du réseau veineux avec les données mémorisées dudit réseau veineux,
   - on en déduit la position actuelle de la zone du corps par rapport à la position de référence préalablement déterminée, et
   - on repositionne des données extraites de l'image capturée de l'empreinte corporelle en tenant compte de la position actuelle de la zone du corps par rapport à sa position de référence.

Ensuite de quoi, on dispose de données extraites de l'image capturée de l'empreinte corporelle de l'individu qui, ainsi corrigées en position, peuvent être exploitées à des fins diverses pour lesquelles l'identification de l'individu par son empreinte digitale n'est qu'une étape intermédiaire. Dans ce cas, seule peut être rendue apparente et/ou être affichée l'étape finale, telle que par exemple un score de correspondance, une décision (OUI/NON) par exemple pour un accès à un local ou à un appareil, un identifiant dans le cas d'une recherche dans une base, ....

## Revendications

1. Installation d'identification d'un individu par relevé d'une empreinte corporelle, notamment d'une empreinte digitale, dans une zone (1) de son corps, cette installation comportant :
- des moyens de capture par voie optique d'une image d'une empreinte corporelle, notamment d'une empreinte digitale, dans ladite zone (1) du corps de l'individu,
- des moyens de capture par voie optique d'une image d'au moins une partie du réseau veineux dans ladite zone (1) du corps de l'individu et sous-jacent à ladite empreinte corporelle,
- deux moyens (7, 8) d'éclairage propres a émettre respectivement deux faisceaux (10, 12) lumineux contenant respectivement deux rayonnements lumineux ayant deux longueurs d'ondes distinctes, et
- deux capteurs (6a, 6b) propres à capter les deux images en relation avec les longueurs d'ondes respectives,
- un élément optique prismatique (16) ayant une grande face (17) dont au moins une partie constitue une région (4) d'apposition d'une zone (1) du corps d'un individu,
- lesdits premiers moyens (7) d'éclairage propres à émettre un premier rayonnement lumineux ayant une première longueur d'onde étant disposés en regard d'une première face latérale (19) dudit élément optique prismatique (16) de manière telle que le premier rayonnement émis par lesdits premiers moyens d'éclairage traverse l'élément optique prismatique pour parvenir sur la susdite région d'apposition,
- ledit premier capteur (6a) sensible audit premier rayonnement étant disposé en regard d'une seconde face latérale inclinée (20) dudit élément optique prismatique (16) de manière à recevoir le premier rayonnement réfléchi par la grande face de l'élément optique prismatique et véhiculant une image de l'empreinte corporelle lorsqu'une zone (1) du corps d'un individu est appliquée sur ladite région (4) d'apposition,
- lesdits seconds moyens (8) d'éclairage propres à émettre un second rayonnement lumineux ayant une seconde longueur d'onde étant disposés en regard d'une petite face (18) de l'élément optique prismatique (16) de manière telle que le second rayonnement émis par lesdits seconds moyens (8) d'éclairage traverse l'élément optique prismatique pour parvenir sur la susdite région (4) d'apposition sensiblement perpendiculairement à celle-ci et propre à pénétrer dans la zone (1) du corps lorsqu'une zone (1) du corps d'un individu est appliquée sur ladite région d'apposition, et
- ledit second capteur (6b) sensible audit second rayonnement étant disposé en regard de ladite petite face (18) de l'élément optique prismatique (16) de manière à recevoir le second rayonnement réfléchi véhiculant une image d'au moins une partie du réseau veineux sous-jacent lorsqu'une zone (1) du corps d'un individu est appliquée sur ladite région (4) d'apposition,
**caractérisé en ce que** la première face latérale dudit élément prismatique (19) est inclinée et opposée à la seconde face latérale inclinée (20) dudit élément prismatique, le premier rayonnement émis par lesdits premiers moyens d'éclairage traversant l'élément optique prismatique sous un angle d'incidence propre à la réflexion totale,
et **en ce que** l'installation comporte :
- des moyens (22) de mémorisation dans lesquels est tenu en mémoire au moins un couple (23) de données formé de données (24) mémorisées extraites de l'image de l'empreinte corporelle de la zone (1) du corps de l'individu et de données (25) mémorisées extraites de l'image du réseau veineux de la zone (1) du corps de l'individu, lesquelles données sont capturées lors d'une étape préliminaire d'enregistrement alors que la zone au corps occupe une position qui est prise comme position de référence,
- des premiers moyens (26) comparateurs propres à comparer des données (Iv) extraites de l'image capturée du réseau veineux de la zone du corps de l'individu, capturées lors d'une étape ultérieure d'identification d'un individu, avec les données (25) mémorisées dudit réseau veineux et en déduire la position actuelle de la zone du corps par rapport à la position de référence préalablement déterminée, et
- des seconds moyens (27) comparateurs propres à comparer des données (Id) extraites de l'image capturée de l'empreinte corporelle de la zone du corps de l'individu, capturées lors de ladite étape ultérieure d'identification de l'individu, avec les données extraites de l'image (24) mémorisée de l'empreinte corporelle, lesdits seconds moyens (27) comparateurs étant placés sous la dépendance desdits premiers moyens (26) comparateurs pour tenir compte de la position de la zone du corps par rapport à sa position de référence.

2. Installation selon la revendication 1, **caractérisée en ce que** l'élément optique prismatique (16) est allongé de manière telle que le premier rayonnement lumineux subisse des réflexions multiples avant de parvenir à ladite seconde face latérale inclinée (20).

3. Installation selon la revendication 1 ou 2, **caractérisée en ce que** les moyens de capture par voie optique d'une image de ladite empreinte corporelle dans une zone (1) du corps de l'individu et les moyens de capture par voie optique d'une image d'au moins une partie du réseau veineux dans la zone (1) du corps de l'individu sont commandés simultanément.

4. Installation selon l'une quelconque des revendications 1 à 3, **caractérisée en ce qu'**une longueur d'onde est située dans le rouge pour la capture de l'image de l'empreinte corporelle et **en ce que** l'autre longueur d'onde est située dans le proche infrarouge pour la capture du réseau veineux.

5. Installation d'identification d'un individu par relevé d'une empreinte corporelle, notamment d'une empreinte digitale, dans une zone (1) de son corps, cette installation comportant :
- des moyens de capture par voie optique d'une image d'une empreinte corporelle, notamment d'une empreinte digitale, dans ladite zone (1) du corps de l'individu,
- des moyens de capture par voie optique d'une image d'au moins une partie du réseau veineux dans ladite zone (1) du corps de l'individu et sous-jacent à ladite empreinte corporelle,
- deux moyens (7, 8) d'éclairage propres a émettre respectivement deux faisceaux (10, 12) lumineux contenant respectivement deux rayonnements lumineux ayant deux longueurs d'ondes distinctes, et
- deux capteurs (6a, 6b) propres à capter les deux images en relation avec les longueurs d'ondes respectives,
- un élément optique prismatique (16) ayant une grande face (17) dont au moins une partie constitue une région (4) d'apposition d'une zone (1) du corps d'un individu,
- lesdits premiers moyens (7) d'éclairage propres à émettre un premier rayonnement lumineux ayant une première longueur d'onde étant disposés en regard d'une première face latérale (19) dudit élément optique prismatique (16) de manière telle que le premier rayonnement émis par lesdits premiers moyens d'éclairage traverse l'élément optique prismatique pour parvenir sur la susdite région d'apposition ,
- ledit premier capteur (6a) sensible audit premier rayonnement étant disposé en regard d'une seconde face latérale inclinée (20) dudit élément optique prismatique (16) de manière à recevoir le premier rayonnement réfléchi par la grande face de l'élément optique prismatique et véhiculant une image de l'empreinte corporelle lorsqu'une zone (1) du corps d'un individu est appliquée sur ladite région (4) d'apposition,
- lesdits seconds moyens (8) d'éclairage propres à émettre un second rayonnement lumineux ayant une seconde longueur d'onde étant disposés en regard d'une petite face (18) de l'élément optique prismatique (16) de manière telle que le second rayonnement émis par lesdits seconds moyens (8) d'éclairage traverse l'élément optique prismatique pour parvenir sur la susdite région (4) d'apposition sensiblement perpendiculairement à celle-ci et propre à pénétrer dans la zone (1) du corps lorsqu'une zone (1) du corps d'un individu est appliquée sur ladite région d'apposition, et
- ledit second capteur (6b) sensible audit second rayonnement étant disposé en regard de ladite petite face (18) de l'élément optique prismatique (16) de manière à recevoir le second rayonnement réfléchi véhiculant une image d'au moins une partie du réseau veineux sous-jacent lorsqu'une zone (1) du corps d'un individu est appliquée sur ladite région (4) d'apposition,
**caractérisé en ce que** la première face latérale dudit élément prismatique (19) est inclinée et opposée à la seconde face latérale inclinée (20) dudit élément prismatique, le premier rayonnement émis par lesdits premiers moyens d'éclairage traversant l'élément optique prismatique sous un angle d'incidence propre à la réflexion totale,
et **en ce que** l'installation comporte :
- des moyens (22) de mémorisation dans lesquels sont tenus en mémoire des couples de données formés de données (24) mémorisées extraites d'une image de l'empreinte corporelle de la zone du corps et de données (25) mémorisées extraites d'une image du réseau veineux de la zone du corps de chaque individu d'un groupe d'individus, lesquelles données sont capturées et mémorisées lors d'une étape préliminaire d'enregistrement alors que la zone du corps occupe, pour chaque individu, une position qui est prise comme position de référence,
- des troisièmes moyens (28) comparateurs propres à comparer, lors d'une étape ultérieure d'identification d'un individu, des données (Iv) extraites de l'image capturée du réseau veineux de la zone du corps d'un individu, capturées lors d'une étape ultérieure d'identification de l'individu, avec les données extraites des images (25) mémorisées de réseaux veineux du groupe d'individus et identifier celles (25') des données mémorisées d'images de réseaux veineux du groupe d'individus qui sont identiques aux données capturées de l'image du réseau veineux de l'individu,
- des premiers moyens (26) comparateurs propres à comparer, lors de ladite étape ultérieure d'identification d'un individu, les données capturées de l'image du réseau veineux de l'individu avec chacune des susdites données mémorisées identifiées d'images de réseau veineux du groupe d'individus et en déduire dans chaque cas la position actuelle de la zone du corps par rapport à la position de référence préalablement déterminée, et
- des seconds moyens (27) comparateurs propres à comparer, lors de ladite étape ultérieure d'identification d'un individu, les données capturées extraites de l'image de l'empreinte corporelle de l'individu avec chacune des données mémorisées d'empreintes corporelles associées respectivement auxdites données mémorisées identifiées d'images de réseau veineux du groupe d'individus, lesdits seconds moyens (27) comparateurs étant placés sous la dépendance desdits premiers moyens (26) comparateurs pour tenir compte dans chaque cas de la position de la zone du corps par rapport à sa position de référence.

6. Installation d'identification d'un individu par relevé d'une empreinte corporelle, notamment d'une empreinte digitale, dans une zone (1) de son corps, cette installation comportant :
- des moyens de capture par voie optique d'une image d'une empreinte corporelle, notamment d'une empreinte digitale, dans ladite zone (1) du corps de l'individu,
- des moyens de capture par voie optique d'une image d'au moins une partie du réseau veineux dans ladite zone (1) du corps de l'individu et sous-jacent à ladite empreinte corporelle,
- deux moyens (7, 8) d'éclairage propres à émettre respectivement deux faisceaux (10, 12) lumineux contenant respectivement deux rayonnements lumineux ayant deux longueurs d'ondes distinctes, et
- deux capteurs (6a, 6b) propres à capter les deux images en relation avec les longueurs d'ondes respectives,
- un élément optique prismatique (16) ayant une grande face (17) dont au moins une partie constitue une région (4) d'apposition d'une zone (1) du corps d'un individu,
- lesdits premiers moyens (7) d'éclairage propres à émettre un premier rayonnement lumineux ayant une première longueur d'onde étant disposés en regard d'une première face latérale (19) dudit élément optique prismatique (16) de manière telle que le premier rayonnement émis par lesdits premiers moyens d'éclairage traverse l'élément optique prismatique pour parvenir sur la susdite région d'apposition,
- ledit premier capteur (6a) sensible audit premier rayonnement étant disposé en regard d'une seconde face latérale inclinée (20) dudit élément optique prismatique (16) de manière à recevoir le premier rayonnement réfléchi par la grande face de l'élément optique prismatique et véhiculant une image de l'empreinte corporelle lorsqu'une zone (1) du corps d'un individu est appliquée sur ladite région (4) d'apposition,
- lesdits seconds moyens (8) d'éclairage propres à émettre un second rayonnement lumineux ayant une seconde longueur d'onde étant disposés en regard d'une petite face (18) de l'élément optique prismatique (16) de manière telle que le second rayonnement émis par lesdits seconds moyens (8) d'éclairage traverse l'élément optique prismatique pour parvenir sur la susdite région (4) d'apposition sensiblement perpendiculairement à celle-ci et propre à pénétrer dans la zone (1) du corps lorsqu'une zone (1) du corps d'un individu est appliquée sur ladite région d'apposition, et
- ledit second capteur (6b) sensible audit second rayonnement étant disposé en regard de ladite petite face (18) de l'élément optique prismatique (16) de manière à recevoir le second rayonnement réfléchi véhiculant une image d'au moins une partie du réseau veineux sous-jacent lorsqu'une zone (1) du corps d'un individu est appliquée sur ladite région (4) d'apposition,
**caractérisé en ce que** la première face latérale dudit élément prismatique (19) est inclinée et opposée à la seconde face latérale inclinée (20) dudit élément prismatique, le premier rayonnement émis par lesdits premiers moyens d'éclairage traversant l'élément optique prismatique sous un angle d'incidence propre à la réflexion totale,
et **en ce que** l'installation comporte :
- des moyens (22) de mémorisation dans lesquels est tenu en mémoire au moins un couple (23) de données formé de données (24) mémorisées extraites de l'image de l'empreinte corporelle de la zone du corps de l'individu et de données (25) mémorisées extraites de l'image du réseau veineux de la zone du corps de l'individu, lesquelles données sont capturées lors d'une étape préliminaire d'enregistrement alors que la zone du corps occupe une position qui est prise comme position de référence,
- des moyens (26) comparateurs propres à comparer des données (Iv) extraites de l'image capturée du réseau veineux de la zone du corps de l'individu, capturées lors d'une étape ultérieure d'identification d'un individu, avec les données (25) mémorisées dudit réseau veineux et en déduire la position actuelle de la zone du corps par rapport à la position de référence préalablement déterminée, et
- des moyens (30) correcteurs placés sous la dépendance desdits moyens (26) comparateurs et propres à corriger des données (Id) extraites de l'image capturée de l'empreinte corporelle de la zone du corps de l'individu, capturées lors de ladite étape ultérieure, en tenant compte de la position actuelle de la zone du corps par rapport à sa position de référence.

7. Procédé d'identification d'un individu propre à être mis en oeuvre par l'installation selon la revendication 1, comprenant les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu,
**caractérisé**
- **en ce que**, au cours d'une étape préliminaire d'enregistrement d'un individu, on capture dans une zone du corps de chaque individu et on tient en mémoire un couple de données formé par des données mémorisées extraites de l'image de l'empreinte corporelle et des données mémorisées extraites de l'image du réseau veineux, la zone du corps occupant une position qui est prise comme position de référence,
- puis en ce que, ultérieurement au cours d'une étape d'identification de l'individu,
. on capture dans la zone du corps de l'individu une image de l'empreinte corporelle et une image du réseau veineux,
. on compare d'abord des données extraites de l'image capturée du réseau veineux avec les données mémorisées dudit réseau veineux,
. on en déduit la position actuelle de la zone du corps par rapport à la position de référence préalablement déterminée, et
. on compare des données extraites de l'image capturée de l'empreinte corporelle avec les données mémorisées de l'empreinte corporelle en tenant compte de la position de la zone du corps par rapport à sa position de référence.

8. Procédé d'identification d'un individu propre à être mis en oeuvre par l'installation selon la revendication 5, comprenant les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu,
**caractérisé**
- **en ce que**, au cours d'une étape préliminaire d'enregistrement d'un groupe d'individus, on capture dans une zone du corps de chaque individu et on tient en mémoire un couple de données formé de données mémorisées extraites de l'image de l'empreinte corporelle et de données mémorisées extraites de l'image du réseau veineux,
- puis en ce que, ultérieurement au cours d'une étape d'identification d'un individu,
. on capture dans la zone du *corps* de l'individu des données extraites de l'image de l'empreinte corporelle et des données extraites de l'image du réseau veineux,
. on compare les données capturées du réseau veineux de l'individu avec les données mémorisées de réseaux veineux des individus du groupe d'individus,
. on sélectionne les données mémorisées de réseaux veineux qui sont identiques auxdites données capturées du réseau veineux, et
. pour celles des données mémorisées d'empreintes corporelles qui sont couplées auxdites données mémorisées de réseau veineux qui ont été sélectionnées, on compare les données capturées du réseau veineux avec les données mémorisées sélectionnées dudit réseau veineux, on en déduit la position actuelle de la zone du corps par rapport à la position de référence préalablement déterminée, et on compare les données capturées de l'empreinte corporelle avec les données mémorisées de l'empreinte corporelle associées aux données mémorisées sélectionnées dudit réseau veineux en tenant compte de la position de la zone du corps par rapport à sa position de référence.

9. Procédé d'identification d'un individu propre à être mis en oeuvre par l'installation selon la revendication 6, comprenant les étapes consistant en ce que :
- on capture par voie optique une image d'une empreinte corporelle, notamment d'une empreinte digitale, dans une zone du corps de l'individu,
- on effectue en parallèle une capture par voie optique d'une image d'au moins une partie du réseau veineux dans ladite zone du corps de l'individu et sous-jacente à ladite empreinte corporelle,
- on traite ladite image d'empreinte corporelle pour obtenir des données extraites de cette image d'empreinte corporelle, et
- on traite les données extraites de l'image capturée de l'empreinte corporelle avec l'aide des données extraites de l'image capturée du réseau veineux, en vue de l'identification de l'individu,
**caractérisé**
- **en ce que**, au cours d'une étape préliminaire d'enregistrement d'un individu, on capture dans une zone du corps de chaque individu et on tient en mémoire un couple de données formé par des données mémorisées extraites de l'image de l'empreinte corporelle et des données mémorisées extraites de l'image du réseau veineux, la zone du corps occupant une position qui est prise comme position de référence,
- puis en ce que, ultérieurement au cours d'une étape de relevé de l'empreinte corporelle de l'individu,
. on capture une image de l'empreinte corporelle et une image du réseau veineux dans la zone du corps de l'individu,
. on compare des données extraites de l'image capturée du réseau veineux avec les données mémorisées dudit réseau veineux,
. on en déduit la position actuelle de la zone du corps par rapport à la position de référence préalablement déterminée, et
. on repositionne des données extraites de l'image capturée de l'empreinte corporelle en tenant compte de la position actuelle de la zone du corps par rapport à sa position de référence.

10. Procédé selon l'une quelconque des revendications 7 à 9, **caractérisé en ce qu'**on capture simultanément l'image de l'empreinte corporelle et l'image du réseau veineux.

11. Procédé selon l'une quelconque des revendications 7 à 10, **caractérisé en ce qu'**on éclaire la zone du corps avec deux rayonnements lumineux respectifs ayant deux longueurs d'ondes distinctes et **en ce qu'**on capte les deux images en relation avec les longueurs d'ondes respectives.

12. Procédé selon la revendication 11, **caractérisé en ce que**, pour la capture de l'image de l'empreinte corporelle, la zone du corps est éclairée avec un rayonnement ayant une longueur d'onde située dans le rouge et, pour la capture du réseau veineux, la zone du corps est éclairée avec un rayonnement ayant une longueur d'onde située dans le proche infrarouge.

## Claims

1. System for identifying an individual by recording a body imprint, in particular a fingerprint, in a region (1) of the body of same, this system comprising means of optically capturing an image of a body imprint, in particular a fingerprint, from said region (1) of the individual's body, means of optically capturing an image of at least a portion of the venous network in said region (1) of the individual's body and underlying said body imprint, said system comprising two lighting means (7, 8) capable of emitting two light beams (10, 12), respectively, containing two light radiations having two separate wavelengths, respectively, and two sensing means (6a, 6b) capable of capturing the two images in connection with the respective wavelengths:
- a prismatic optical element (16) having a large face (17) at least a portion of which consists of a region (4) for apposition of a body region (1) of an individual,
- first lighting means (7) capable of emitting a first light radiation having a first wavelength and being arranged opposite a first inclined lateral face (19) of said prismatic optical element (16), such that the first radiation emitted by said first lighting means passes through the prismatic optical element in order to arrive at said apposition region,
- said first sensor (6a) sensitive to said first radiation being arranged opposite a second inclined lateral face (20) of said prismatic optical element (16), so as to receive the first radiation reflected by the large face of the prismatic optical element and carrying an image of the body imprint when a region (1) of an individual's body is applied to said apposition region (4),
- said second lighting means (8) capable of emitting a second light radiation having a second wavelength being arranged opposite a small face (18) of the prismatic optical element (16) such that the second radiation emitted by said second lighting means (8) passes through the prismatic optical element in order to arrive at said apposition region (4), which is substantially perpendicular thereto and capable of penetrating into the region (1) of the body when a region (1) of an individual's body is applied to said apposition region, and
- said second sensor (6b) sensitive to said second radiation being arranged opposite said small face (18) of the prismatic optical element (16) so as to receive the second reflected radiation carrying an image of at least a portion of the underlying venous network, when a region (1) of an individual's body is applied to said apposition region (4), **characterized in that** said first inclined lateral face (19) of said prismatic optical element is inclined and opposite the second inclined lateral face (20) of said prismatic optical element, the first light radiation emitted by said first lighting means passes through the prismatic optical element at an angle of incidence capable of total reflection, and **in that** the system comprises:
- storage means (22) in which at least one data pair (23) is stored in memory, which consists of stored data (24) extracted from the body imprint image of the region (1) of the individual's body and of stored data (25) extracted from the image of the venous network of the region (1) of the individual's body, which data is captured during a preliminary registration step, while the body region occupies a position which is taken as a reference position,
- first comparator means (26) capable of comparing data (Iv) extracted from the captured image of the venous network of the region of the individual's body, which are captured during a later step for identifying an individual, with the stored data (25) from said venous network, and of deducing therefrom the actual position of the body region in relation to the previously defined reference position, and
- second comparator means (27) capable of comparing data (Id) extracted from the captured image of the body imprint of the region of the individual's body, which are captured during said later step for identifying the individual, with the data extracted from the stored image (24) of the body imprint, said second comparator means (27) being placed under the dependency of said first comparator means (26), in order to take account of the position of the body region in relation to the reference position thereof.

2. System according to claim 1, **characterized in that** the prismatic optical element (16) is elongate such that the first light radiation undergoes multiple reflections prior to arriving at said second inclined lateral face (20).

3. System according to claim 1 or 2, **characterized in that** the means of optically capturing an image of said body imprint in a region (1) of the individual's body and the means of optically capturing an image of at least a portion of the venous network in the region (1) of the individual's body are controlled simultaneously.

4. System according to one of claims 1 to 3, **characterized in that** one wavelength is situated in the red for capturing the body imprint image, and the other wavelength is situated in the near-infrared for capturing the venous network.

5. System for identifying an individual by recording a body imprint, in particular a fingerprint, in a region (1) of the body of same, this system comprising means of optically capturing an image of a body imprint, in particular a fingerprint, from said region (1) of the individual's body, means of optically capturing an image of at least a portion of the venous network in said region (1) of the individual's body and underlying said body imprint, said system comprising two lighting means (7, 8) capable of emitting two light beams (10, 12), respectively, containing two light radiations having two separate wavelengths, respectively, and two sensing means (6a, 6b) capable of capturing the two images in connection with the respective wavelengths:
- a prismatic optical element (16) having a large face (17) at least a portion of which consists of a region (4) for apposition of a body region (1) of an individual,
- first lighting means (7) capable of emitting a first light radiation having a first wavelength and being arranged opposite a first inclined lateral face (19) of said prismatic optical element (16), such that the first radiation emitted by said first lighting means passes through the prismatic optical element in order to arrive at said apposition region,
- said first sensor (6a) sensitive to said first radiation being arranged opposite a second inclined lateral face (20) of said prismatic optical element (16), so as to receive the first radiation reflected by the large face of the prismatic optical element and carrying an image of the body imprint when a region (1) of an individual's body is applied to said apposition region (4),
- said second lighting means (8) capable of emitting a second light radiation having a second wavelength being arranged opposite a small face (18) of the prismatic optical element (16) such that the second radiation emitted by said second lighting means (8) passes through the prismatic optical element in order to arrive at said apposition region (4), which is substantially perpendicular thereto and capable of penetrating into the region (1) of the body when a region (1) of an individual's body is applied to said apposition region, and
- said second sensor (6b) sensitive to said second radiation being arranged opposite said small face (18) of the prismatic optical element (16) so as to receive the second reflected radiation carrying an image of at least a portion of the underlying venous network, when a region (1) of an individual's body is applied to said apposition region (4), **characterized in that** said first inclined lateral face (19) of said prismatic optical element is inclined and opposite the second inclined lateral face (20) of said prismatic optical element, the first light radiation emitted by said first lighting means passes through the prismatic optical element at an angle of incidence capable of total reflection, and **in that** said system comprises:
- storage means (22) in which data pairs are stored in memory, which consist of stored data (24) extracted from a body imprint image of the region of the individual's body and of stored data (25) extracted from an image of the venous network of the region of the body of each individual of a group of individuals, which data is captured and stored during a preliminary registration step, while, for each individual, the body region occupies a position which is taken as a reference position,
- third comparator means (28), which, during a later step for identifying an individual, are capable of comparing data (Iv) extracted from the captured image of the venous network of the body region of an individual, which are captured during a later step for identifying the individual, with the data extracted from the stored images (25) of venous networks of the group of individuals, and of identifying which (25') stored data of venous network images of the group of individuals is identical with the captured data of individual's venous network image,
- first comparator means (26), which, during said later step for identifying an individual, are capable of comparing the captured data of the individual's venous network image with each of said identified stored data of venous network images of the group of individuals, and, in each case, of deducing therefrom the actual position of the body region in relation to the previously determined reference position, and
- second comparator means (27), which, during said later step for identifying an individual, are capable of comparing the captured data extracted from the individual's body imprint image with each of the stored data of body imprints associated with said identified stored data of venous network images of the group of individuals, respectively, said second comparator means (27) being placed under the dependency of said first comparator means (26) in order to take account, in each case, of the position of the body region in relation to the reference position thereof.

6. System for identifying an individual by recording a body imprint, in particular a fingerprint, in a region (1) of the body of same, this system comprising means of optically capturing an image of a body imprint, in particular a fingerprint, from said region (1) of the individual's body, means of optically capturing an image of at least a portion of the venous network in said region (1) of the individual's body and underlying said body imprint, said system comprising two lighting means (7, 8) capable of emitting two light beams (10, 12), respectively, containing two light radiations having two separate wavelengths, respectively, and two sensing means (6a, 6b) capable of capturing the two images in connection with the respective wavelengths:
- a prismatic optical element (16) having a large face (17) at least a portion of which consists of a region (4) for apposition of a body region (1) of an individual,
- first lighting means (7) capable of emitting a first light radiation having a first wavelength and being arranged opposite a first inclined lateral face (19) of said prismatic optical element (16), such that the first radiation emitted by said first lighting means passes through the prismatic optical element in order to arrive at said apposition region,
- said first sensor (6a) sensitive to said first radiation being arranged opposite a second inclined lateral face (20) of said prismatic optical element (16), so as to receive the first radiation reflected by the large face of the prismatic optical element and carrying an image of the body imprint when a region (1) of an individual's body is applied to said apposition region (4),
- said second lighting means (8) capable of emitting a second light radiation having a second wavelength being arranged opposite a small face (18) of the prismatic optical element (16) such that the second radiation emitted by said second lighting means (8) passes through the prismatic optical element in order to arrive at said apposition region (4), which is substantially perpendicular thereto and capable of penetrating into the region (1) of the body when a region (1) of an individual's body is applied to said apposition region, and
- said second sensor (6b) sensitive to said second radiation being arranged opposite said small face (18) of the prismatic optical element (16) so as to receive the second reflected radiation carrying an image of at least a portion of the underlying venous network, when a region (1) of an individual's body is applied to said apposition region (4), **characterized in that** said first inclined lateral face (19) of said prismatic optical element is inclined and opposite the second inclined lateral face (20) of said prismatic optical element, the first light radiation emitted by said first lighting means passes through the prismatic optical element at an angle of incidence capable of total reflection, and **in that** the system comprises:
- storage means (22) in which at least one data pair (23) is stored in memory, which consists of stored data (24) extracted from the body imprint image of the region of the individual's body and of stored data (25) extracted from the image of the venous network of the region of the individual's body, which data is captured during a preliminary registration step, while the body region occupies a position which is taken as a reference position,
- comparator means (26) capable of comparing data (Iv) extracted from the captured image of the venous network of the region of the individual's body, which are captured during a later step for identifying an individual, with the stored data (25) from said venous network, and of deducing therefrom the actual position of the body region in relation to the previously defined reference position, and
- correcting means (30) placed under the dependency of said comparator means (26) and capable of correcting data (Id) extracted from said captured image of the body imprint of the region of the individual's body, which are captured during said later step, while taking account of the actual position of the body region in relation to the reference position thereof.

7. Method for identifying an individual, which is capable of being implemented by the system according to claim 1, comprising the steps consisting in:
- optically capturing an image of a body imprint, in particular a fingerprint, from a region of the individual's body,
- optically capturing, in parallel, an image of at least a portion of the venous network from said region of the individual's body and underlying said body imprint,
- processing said body imprint image in order to obtain data extracted from this body imprint image, and
- processing the data extracted from the captured image of the body imprint with the aid of the data extracted from the captured image of the venous network, with a view to identifying the individual,
**characterized in that**, during a preliminary registration step of an individual, a data pair, consisting of stored data extracted from the body imprint image and stored data extracted from the venous network image, is captured and stored in memory, the body region occupying a position which is taken as a reference position,
- and then, **in that**, subsequently during a step of identifying the individual,
-- a body imprint image and a venous network image are captured from the region of individual's body,
-- data extracted from the captured image of the venous network is first compared with the stored data from said venous network,
-- the actual position of the body region is deduced therefrom, in relation to the previously determined reference position, and
-- data extracted from the captured image of the body imprint is compared with the stored data from the body imprint, while taking account of the position of the body region in relation to the reference position thereof.

8. Method for identifying an individual, which is capable of being implemented by the system according to claim 5, comprising the steps consisting in that:
- optically capturing an image of a body imprint, in particular a fingerprint, from a region of the individual's body,
- optically capturing, in parallel, an image of at least a portion of the venous network from said region of the individual's body and underlying said body imprint,
- processing said body imprint image in order to obtain data extracted from this body imprint image, and
- processing the data extracted from the captured image of the body imprint with the aid of the data extracted from the captured image of the venous network, with a view to identifying the individual,
**characterized in that**, during a preliminary registration step for a group of individuals, a data pair, consisting of stored data extracted from the body imprint image and stored data extracted from the venous network image, is captured from a body region of each individual and stored in memory,
- and then, **in that**, subsequently during a step of identifying an individual,
-- data extracted from the body imprint image and data extracted from the venous network image is captured from the region of the individual's body,
-- the data captured from the venous network of the individual is compared with the stored data from venous networks of the individuals of the group of individuals,
-- the stored venous network data which is identical to said captured venous network data is selected, and
-- for the stored body imprint data which is paired with said stored venous network data that was selected, the captured venous network data is compared with the selected stored data of said venous network, and the actual position of the body region is deduced therefrom in relation to the previously determined reference position, and the captured body imprint data is compared with the stored body imprint data associated with the selected stored data of said venous network, while taking account of the position of the body region in relation to the reference position thereof.

9. Method for identifying an individual, which is capable of being implemented by the system according to claim 6, comprising the steps consisting in that:
- optically capturing an image of a body imprint, in particular a fingerprint, from a region of the individual's body,
- optically capturing, in parallel, an image of at least a portion of the venous network from said region of the individual's body and underlying said body imprint,
- processing said body imprint image in order to obtain data extracted from this body imprint image, and
- processing the data extracted from the captured image of the body imprint with the aid of the data extracted from the captured image of the venous network, with a view to identifying the individual.
**characterized in that**, during a preliminary registration step of an individual, a data pair, consisting of stored data extracted from the body imprint image and stored data extracted from the venous network image, is captured from a body region of each individual and stored in memory, the body region occupying a position which is taken as a reference position,
- and then, **in that**, subsequently during a step of recording the body imprint of the individual,
-- a body imprint image and a venous network image are captured from the region of individual's body,
-- data extracted from the captured image of the venous network is compared with the stored data from said venous network,
-- the actual position of the body region is deduced therefrom, in relation to the previously determined reference position, and
-- data extracted from the captured body imprint image is repositioned, while taking account of the actual position of the body region in relation to the reference position thereof.

10. Method according to any of claims 7 to 9, **characterized in that** the body imprint image and the venous network image are captured simultaneously.

11. Method according to any of claims 7 to 10, **characterized in that** the body region is illuminated with two light radiations having two separate wavelengths, and the two images are captured in connection with the respective wavelengths.

12. Method according to claim 11, **characterized in that**, to capture the body imprint image, the body region is illuminated with radiation having a wavelength situated in the red and, to capture the venous network, the body region is illuminated with radiation having a wavelength situated in the near-infrared.

## Patentansprüche

1. Gerät zur Identifizierung eines Individuums durch Ablesung eines Körperabdrucks, insbesondere eines Fingerabdrucks, in einer Zone (1) seines Körpers, wobei dieses Gerät Folgendes umfasst:
- Mittel zum Erfassen auf optischem Weg eines Bildes eines Körperabdrucks, insbesondere eines Fingerabdrucks in dieser Zone (1) des Körpers des Individuums,
- Mittel zum Erfassen auf optischem Weg eines Bildes mindestens eines Teils des Adernnetzes in dieser Zone (1) des Körpers des Individuums und unter dem Körperabdruck liegend,
- zwei zum Abgeben von jeweils zwei Lichtstrahlen (10, 12), enthaltend jeweils zwei Lichtstrahlungen mit zwei getrennten Wellenlängen, geeignete Beleuchtungsmittel (7, 8), und
- zwei zum Erfassen der zwei Bilder im Verhältnis mit den jeweiligen Wellenlängen geeignete Aufnehmer (6a, 6b),
- ein prismatisches optisches Element (16) mit einer großen Oberfläche (17), von der mindestens ein Teil einen Bereich (4) der Anlagerung an eine Zone (1) des Körpers eines Individuums bildet,
- wobei die zum Abgeben einer ersten Lichtstrahlung mit einer ersten Wellenlänge geeigneten ersten Beleuchtungsmittel (7) hinsichtlich einer ersten Seitenfläche (19) des prismatischen optischen Elements (16)so angeordnet sind, dass die durch die ersten Beleuchtungsmittel abgegebene erste Strahlung das prismatische optische Element durchläuft, um zu dem Anlagerungsbereich zu gelangen,
- wobei der für die erste Strahlung empfindliche erste Aufnehmer (6a) hinsichtlich einer zweiten geneigten Seitenfläche (20) des prismatischen optischen Elements (16) zum Empfangen der ersten durch die große Oberfläche des prismatischen optischen Elements reflektierten Strahlung angeordnet ist und ein Bild des Körperabdrucks übermittelt, wenn eine Zone (1) des Körpers eines Individuums an den Anlagerungsbereich (4) angelegt wird,
- wobei die zum Abgeben einer zweiten Lichtstrahlung mit einer zweiten Wellenlänge geeigneten zweiten Beleuchtungsmittel (8) hinsichtlich einer kleinen Fläche (18) des prismatischen optischen Elements (16) so angeordnet sind, dass die durch die zweiten Beleuchtungsmittel (8) abgegebene zweite Strahlung das prismatische optische Element durchläuft, um im Wesentlichen senkrecht zu diesem auf den Anlagerungsbereich (4) und geeignet zum Durchdringen in die Zone (1) des Körpers zu gelangen, wenn eine Zone (1) des Körpers eines Individuums an den Anlagerungsbereich angelegt wird, und
- wobei der für die zweite Strahlung empfindliche zweite Aufnehmer (6b) hinsichtlich der kleinen Fläche (18) des prismatischen optischen Elements (16) zum Empfangen der ein Bild mindestens eines Teils des darunterliegenden Adernnetzes übermittelnden reflektierten zweiten Strahlung angeordnet ist, wenn eine Zone (1) des Körpers eines Individuums an den Anlagerungsbereich (4) angelegt wird,
**dadurch gekennzeichnet, dass** die erste Seitenfläche des prismatischen Elements (19) geneigt und der zweiten geneigten Seitenfläche (20) des prismatischen Elements entgegengesetzt ist, wobei die durch die ersten Beleuchtungsmittel abgegebene erste Strahlung das prismatische optische Element in einem für die Gesamtreflexion geeigneten Einfallswinkel durchläuft,
und dass das Gerät Folgendes umfasst:
- Speichermittel (22), in denen mindestens ein Paar (23) von aus dem Bild des Körperabdrucks der Zone (1) des Körpers des Individuums entnommenen gespeicherten Daten (24) und aus dem Bild des Adernnetzes der Zone (1) des Körpers des Individuums entnommenen gespeicherten Daten (25) gebildeten Daten im Speicher bewahrt werden, wobei die Daten während einer Aufzeichnungsvorstufe erfasst werden, wenn die Zone des Körpers eine Lage einnimmt, die als Bezugslage genommen wird,
- erste zum Vergleichen der dem von dem Adernnetz der Zone des Körpers des Individuums erfassten Bild entnommenen Daten (Iv), erfasst während einer nachfolgenden Identifizierungsstufe eines Individuums, mit den gespeicherten Daten (25) des Adernnetzes und daraus Ableiten der aktuellen Lage der Zone des Körpers im Vergleich mit der vorherbestimmten Bezugslage geeignete Vergleichermittel (26), und
- zweite zum Vergleichen der dem von dem Körperabdruck der Zone des Körpers des Individuums erfassten Bild entnommenen Daten (Id), erfasst während der späteren Identifizierungsstufe des Individuums, mit den dem gespeicherten Bild (24) des Körperabdrucks entnommenen Daten geeignete Vergleichermittel (27), wobei die zweiten Vergleichermittel (27) in Abhängigkeit von den ersten Vergleichermitteln (26) platziert werden, um die Lage der Zone des Körpers in Bezug auf ihre Bezugslage zu berücksichtigen.

2. Gerät nach Anspruch 1, **dadurch gekennzeichnet, dass** das prismatische optische Element (16) so verlängert ist, dass die erste Lichtstrahlung mehreren Reflexionen unterworfen ist, ehe sie die zweite geneigte Seitenfläche (20) durchläuft.

3. Gerät nach Anspruch 1 oder 2, **dadurch gekennzeichnet, dass** die Mittel zur Aufnahme auf optischem Weg eines Bildes des Körperabdruckes in einer Zone (1) des Körpers des Individuums und die Mittel zur Aufnahme auf optischem Wege eines Bildes mindestens eines Teils des Adernnetzes in der Zone (1) des Körpers des Individuums gleichzeitig angesteuert werden.

4. Gerät nach einem beliebigen der Ansprüche 1 bis 3, **dadurch gekennzeichnet, dass** eine Wellenlänge zur Erfassung des Körperabdruckbildes im Rot liegt und dass die andere Wellenlänge zur Erfassung des Adernnetzes im nahen Infrarot liegt.

5. Gerät zur Identifizierung eines Individuums durch Ablesung eines Körperabdrucks, insbesondere eines Fingerabdrucks, in einer Zone (1) seines Körpers, wobei dieses Gerät Folgendes umfasst:
- Mittel zum Erfassen auf optischem Weg eines Bildes eines Körperabdrucks, insbesondere eines Fingerabdrucks, in dieser Zone (1) des Körpers des Individuums,
- Mittel zum Erfassen auf optischem Weg eines Bildes mindestens eines Teils des Adernnetzes in dieser Zone (1) des Körpers des Individuums und unter diesem Körperabdruck liegend,
- zwei zum Abgeben von jeweils zwei Lichtstrahlen (10, 12), enthaltend jeweils zwei Lichtstrahlungen mit zwei getrennten Wellenlängen, geeignete Beleuchtungsmittel (7, 8), und
- zwei zum Erfassen der zwei Bilder im Verhältnis mit den jeweiligen Wellenlängen geeignete Aufnehmer (6a, 6b),
- ein prismatisches optisches Element (16) mit einer großen Fläche (17), von der mindestens ein Teil einen Anlagerungsbereich (4) an eine Zone (1) des Körpers eines Individuums bildet,
- wobei die zum Abgeben einer ersten Lichtstrahlung mit einer ersten Wellenlänge geeigneten ersten Beleuchtungsmittel (7) hinsichtlich einer ersten Seitenfläche (19) des prismatischen optischen Elements (16) so angeordnet sind, dass die durch die ersten Beleuchtungsmittel abgegebene erste Strahlung das prismatische optische Element durchläuft, um zu dem Anlagerungsbereich zu gelangen,
- wobei der für die erste Strahlung empfindliche erste Aufnehmer (6a) hinsichtlich einer zweiten geneigten Seitenfläche (20) des prismatischen optischen Elements (16) zum Empfangen der ersten durch die große Oberfläche des prismatischen optischen Elements reflektierten Strahlung angeordnet ist und ein Bild des Körperabdrucks übermittelt, wenn eine Zone (1) des Körpers eines Individuums an den Anlagerungsbereich (4) angelegt wird,
- wobei die zum Abgeben einer zweiten Lichtstrahlung mit einer zweiten Wellenlänge geeigneten zweiten Beleuchtungsmittel (8) hinsichtlich einer kleinen Fläche (18) des prismatischen optischen Elements (16) so angeordnet sind, dass die durch die zweiten Beleuchtungsmittel (8) abgegebene zweite Strahlung das prismatische optische Element durchläuft, um im Wesentlichen senkrecht zu diesem auf den Anlagerungsbereich (4) und geeignet zum Durchdringen in die Zone (1) des Körpers zu gelangen, wenn eine Zone (1) des Körpers eines Individuums an den Anlagerungsbereich angelegt wird, und
- wobei der für die zweite Strahlung empfindliche zweite Aufnehmer (6b) hinsichtlich der kleinen Fläche (18) des prismatischen optischen Elements (16) zum Empfangen der ein Bild mindestens eines Teils des darunterliegenden Adernnetzes übermittelnden reflektierten zweiten Strahlung angeordnet ist, wenn eine Zone (1) des Körpers eines Individuums an den Anlagerungsbereich (4) angelegt wird,
**dadurch gekennzeichnet, dass** die erste Seitenfläche des prismatischen Elements (19) geneigt und der zweiten geneigten Seitenfläche (20) des prismatischen Elements entgegengesetzt ist, wobei die durch die ersten Beleuchtungsmittel abgegebene erste Strahlung das prismatische optische Element in einem für die Gesamtreflexion geeigneten Einfallswinkel durchläuft,
und dass das Gerät Folgendes umfasst:
- Speichermittel (22), in denen aus einem Bild des Körperabdrucks der Zone des Körpers entnommenen gespeicherten Daten (24) und aus einem Bild des Adernnetzes der Zone des Körpers jedes Individuums einer Gruppe von Individuen entnommenen gespeicherten Daten (25) gebildete Datenpaare im Speicher bewahrt werden, wobei die Daten während einer Aufzeichnungsvorstufe erfasst und gespeichert werden, wenn die Zone des Körpers für jedes Individuum eine Lage einnimmt, die als Bezugslage genommen wird,
- dritte zum Vergleichen während einer nachfolgenden Identifizierungsstufe eines Individuums von dem vom Adernnetz der Zone des Körpers eines Individuums erfassten Bild entnommenen Daten (Iv), erfasst während einer nachfolgenden Identifizierungsstufe des Individuums, mit den den Bilden der Adernnetze einer Gruppe von Individuen entnommenen gespeicherten Daten (25) und Identifizieren derjenigen (25') der gespeicherten Daten von Bildern der Adernnetze einer Gruppe von Individuen, die mit den erfassten Daten des Bildes des Adernnetzes des Individuums identisch sind, geeignete Vergleichermittel (28),
- erste zum Vergleichen während der nachfolgenden Identifizierungsstufe eines Individuums der erfassten Daten des Bildes des Adernnetzes des Individuums mit jedem der identifizierten gespeicherten Daten des Adernnetzes der Gruppe von Individuen und daraus Ableiten in jedem Fall der aktuellen Lage der Zone des Körpers im Vergleich mit der vorherbestimmten Bezugslage geeignete Vergleichermittel (26), und
- zweite zum Vergleichen während der nachfolgenden Identifizierungsstufe eines Individuums der dem Körperabdruckbild des Individuums entnommenen erfassten Daten mit jedem der jeweils den identifizierten gespeicherten Daten von Adernnetzbildern der Gruppe von Individuen zugeordneten gespeicherten Körperabdruckdaten geeignete Vergleichermittel (27), wobei diese zweiten Vergleichermittel (27) in Abhängigkeit von den ersten Vergleichermitteln (26) platziert sind, um in jedem Fall die Lage der Zone des Körpers im Vergleich mit ihrer Bezugslage zu berücksichtigen.

6. Gerät zur Identifizierung eines Individuums durch Ablesen eines Körperabdrucks, insbesondere eines Fingerabdrucks, in einer Zone (1) seines Körpers, wobei dieses Gerät Folgendes umfasst:
- Mittel zum Erfassen auf optischem Weg eines Bildes eines Körperabdrucks, insbesondere eines Fingerabdrucks, in dieser Zone (1) des Körpers des Individuums,
- Mittel zum Erfassen auf optischem Weg eines Bildes mindestens eines Teils des Adernnetzes in dieser Zone (1) des Körpers des Individuums und unter dem Körperabdruck liegend,
- zwei zum Abgeben von jeweils zwei Lichtstrahlen (10, 12), enthaltend jeweils zwei Lichtstrahlungen mit zwei getrennten Wellenlängen, geeignete Beleuchtungsmittel (7, 8), und
- zwei zum Erfassen der zwei Bilder im Verhältnis mit den jeweiligen Wellenlängen geeignete Aufnehmer (6a, 6b),
- ein prismatisches optisches Element (16) mit einer großen Fläche (17), von der mindestens ein Teil einen Anlagerungsbereich (4) einer Zone (1) des Körpers eines Individuums bildet,
- wobei die zum Abgeben einer ersten Lichtstrahlung mit einer ersten Wellenlänge geeigneten ersten Beleuchtungsmittel (7) hinsichtlich einer ersten Seitenfläche (19) des prismatischen optischen Elements (16) so angeordnet sind, dass die durch die ersten Beleuchtungsmittel abgegebene erste Strahlung das prismatische optische Element durchläuft, um auf den Anlagerungsbereich zu gelangen,
- wobei der für die erste Strahlung empfindliche erste Aufnehmer (6a) hinsichtlich einer zweiter geneigten Seitenfläche (20) des prismatischen optischen Elements (16) zum Empfangen der ersten durch die große Fläche des prismatischen optischen Elements reflektierten Strahlung angeordnet ist und ein Bild des Körperabdrucks übermittelt, wenn eine Zone (1) des Körpers eines Individuums an den Anlagerungsbereich (4) angelegt wird,
- wobei die zum Abgeben einer zweiten Lichtstrahlung mit einer zweiten Wellenlänge geeigneten zweiten Beleuchtungsmittel (8) hinsichtlich einer kleinen Fläche (18) des prismatischen optischen Elements (16) so angeordnet sind, dass die durch die zweiten Beleuchtungsmittel (8) abgegebene zweite Strahlung das prismatische optische Element durchläuft, um im Wesentlichen senkrecht zu diesem auf den Anlagerungsbereich (4) und geeignet zum Durchdringen in die Zone (1) des Körpers zu gelangen, wenn eine Zone (1) des Körpers eines Individuums an den Anlagerungsbereich angelegt wird, und
- wobei der für die zweite Strahlung empfindliche zweite Aufnehmer (6b) hinsichtlich der kleinen Fläche (18) des prismatischen optischen Elements (16) zum Empfangen der ein Bild mindestens eines Teils des darunterliegenden Adernnetzes übermittelnden reflektierten zweiten Strahlung angeordnet ist, wenn eine Zone (1) des Körpers eines Individuums an den Anlagerungsbereich (4) angelegt wird,
**dadurch gekennzeichnet, dass** die erste Seitenfläche des prismatischen Elements (19) geneigt und der zweiten geneigten Seitenfläche (20) des prismatischen Elements entgegengesetzt ist, wobei die durch die ersten Beleuchtungsmittel abgegebene erste Strahlung das prismatische optische Element in einem für die Gesamtreflexion geeigneten Einfallswinkel durchläuft,
und dass das Gerät Folgendes umfasst:
- Speichermittel (22), in denen mindestens ein Paar (23) von aus dem Bild des Körperabdrucks der Zone des Körpers des Individuums entnommenen gespeicherten Daten (24) und aus dem Bild des Adernnetzes der Zone des Körpers des Individuums entnommenen gespeicherten Daten (25) gebildeten Daten im Speicher bewahrt werden, wobei die Daten während einer Aufzeichnungsvorstufe erfasst werden, wenn die Zone des Körpers eine Lage einnimmt, die als Bezugslage genommen wird,
- zum Vergleichen der dem von dem Adernnetz der Zone des Körpers des Individuums erfassten Bild entnommenen Daten (Iv), erfasst während einer nachfolgenden Identifizierungsstufe eines Individuums, mit den gespeicherten Daten (25) des Adernnetzes und daraus Ableiten der aktuellen Lage der Zone des Körpers im Vergleich mit der vorherbestimmten Bezugslage geeignete Vergleichermittel (26), und
- Korrekturmittel (30), platziert in Abhängigkeit von den Vergleichermitteln (26) und geeignet zum Korrigieren der dem erfassten Bild des Körperabdrucks der Zone des Körpers des Individuums entnommenen Daten (Id), erfasst während der nachfolgenden Stufe, unter Berücksichtigung der aktuellen Lage der Zone des Körpers im Vergleich mit ihrer Bezugslage.

7. Verfahren zum Identifizieren eines Individuums, geeignet zur Durchführung durch das Gerät nach Anspruch 1, umfassend Schritte bestehend aus:
- Erfassen auf optischem Weg eines Bildes eines Körperabdrucks, insbesondere eines Fingerabdrucks, in einer Zone des Körpers des Individuums,
- paralleles Bewirken einer Erfassung auf optischem Weg eines Bildes mindestens eines Teils des Adernnetzes in der Zone des Körpers des Individuums und unter dem Körperabdruck liegend,
- Bearbeiten des Körperabdruckbildes zum Erhalten von diesem Körperabdruckbild entnommenen Daten, und
- Bearbeiten der dem von dem Körperabdruck erfassten Bild entnommenen Daten mit Hilfe von dem vom Adernnetz erfassten Bild entnommenen Daten zur Identifizierung des Individuums,
**dadurch gekennzeichnet, dass**
- im Verlauf einer Aufzeichnungsvorstufe eines Individuums ein Paar von aus dem Körperabdruckbild entnommenen gespeicherten Daten und aus dem Adernnetzbild entnommenen gespeicherten Daten gebildeten Daten in einer Zone des Körpers jedes Individuums erfasst und im Speicher bewahrt wird, wobei die Zone des Körpers eine Lage einnimmt, die als Bezugslage genommen wird,
- und dass nachfolgend im Verlauf einer Identifizierungsstufe des Individuums,
. ein Körperabdruckbild und ein Bild des Adernnetzes in der Zone des Körpers des Individuums erfasst werden,
. zuerst die dem von dem Adernnetz erfassten Bild entnommenen Daten mit den gespeicherten Daten des Adernnetzes verglichen werden,
. daraus die aktuelle Lage der Zone des Körpers im Vergleich mit der vorherbestimmten Bezugslage abgeleitet wird, und
. dem vom Körperabdruck erfassten Bild entnommene Daten mit den gespeicherten Daten des Körperabdrucks unter Berücksichtigung der Lage der Zone des Körpers im Vergleich mit ihrer Bezugslage verglichen werden.

8. Verfahren zur Identifizierung eines Individuums, geeignet zur Durchführung durch das Gerät nach Anspruch 5, umfassend die Schritte bestehend daraus, dass
- ein Bild eines Körperabdrucks, insbesondere eines Fingerabdrucks, in einer Zone des Körpers des Individuums auf optischem Weg erfasst wird,
- parallel dazu eine Erfassung auf optischem Weg eines Bildes mindestens eines Teils des Adernnetzes in der Zone des Körpers des Individuums und unter dem Körperabdruck liegend bewirkt wird,
- das Körperabdruckbild zum Erhalten von diesem Körperabdruckbild entnommenen Daten bearbeitet wird, und
- die dem von dem Körperabdruck erfassten Bild entnommenen Daten mit Hilfe von dem vom Adernnetz erfassten Bild entnommenen Daten zur Identifizierung des Individuums bearbeitet werden,
**dadurch gekennzeichnet, dass**
- im Verlauf einer Aufzeichnungsvorstufe einer Gruppe von Individuen ein Paar von aus dem Körperabdruckbild entnommenen gespeicherten Daten und aus dem Adernnetzbild entnommenen gespeicherten Daten gebildeten Daten in einer Zone des Körpers jedes Individuums erfasst und im Speicher bewahrt wird,
- und dass nachfolgend im Verlauf einer Identifizierungsstufe eines Individuums
. dem Körperabdruckbild entnommene Daten und dem Adernnetzbild entnommene Daten in der Zone des Körpers des Individuums erfasst werden,
. die erfassten Daten des Adernnetzes des Individuums mit den gespeicherten Daten von Adernnetzen von Individuen der Gruppe von Individuen verglichen werden,
. gespeicherte Daten von Adernnetzen, die mit den erfassten Daten des Adernnetzes identisch sind, ausgewählt werden und
. für diejenigen der gespeicherten Daten von Körperabdrücken, die mit den gespeicherten Daten von Adernnetzen gepaart sind, die ausgewählt worden sind, die erfassten Daten des Adernnetzes mit den ausgewählten gespeicherten Daten des Adernnetzes verglichen werden, und daraus die aktuelle Lage der Zone des Körpers im Vergleich mit der vorherbestimmten Bezugslage abgeleitet wird und die erfassten Daten des Körperabdrucks mit den den gespeicherten ausgewählten Daten des Adernnetzes zugeordneten gespeicherten Daten des Körperabdrucks verglichen werden unter Berücksichtigung der Lage der Zone des Körpers im Vergleich mit ihrer Bezugslage.

9. Verfahren zur Identifizierung eines Individuums, geeignet zur Durchführung durch das Gerät nach Anspruch 6, umfassend die Schritte bestehend daraus, dass
- ein Bild eines Körperabdrucks, insbesondere eines Fingerabdrucks, in einer Zone des Körpers des Individuums auf optischem Weg erfasst wird,
- parallel dazu ein Bild mindestens eines Teils des Adernnetzes in der Zone des Körpers des Individuums und unter dem Körperabdruck liegend auf optischem Weg erfasst wird,
- das Körperabdruckbild zum Erhalten der aus diesem Körperabdruckbild entnommenen Daten bearbeitet wird, und
- die dem von dem Körperabdruck erfassten Bild entnommenen Daten mit Hilfe von dem vom Adernnetz erfassten Bild entnommenen Daten zur Identifizierung des Individuums bearbeitet werden,
**dadurch gekennzeichnet,**
- **dass** im Verlauf einer Aufzeichnungsvorstufe eines Individuums ein Paar von durch dem Körperabdruckbild entnommene gespeicherte Daten und dem Adernnetzbild entnommene gespeicherte Daten gebildeten Daten in einer Zone des Körpers jedes Individuums erfasst und im Speicher bewahrt wird, wobei die Zone des Körpers eine Lage einnimmt, die als Bezugslage genommen wird,
- und **dass** nachfolgend im Verlauf einer Stufe des Ablesens des Körperabdrucks des Individuums,
. ein Körperabdruckbild und ein Bild des Adernnetzes in der Zone des Körpers des Individuums erfasst werden,
. dem erfassten Bild des Adernnetzes entnommene Daten mit den gespeicherten Daten des Adernnetzes verglichen werden,
. daraus die aktuelle Lage der Zone des Körpers im Vergleich mit der vorherbestimmten Bezugslage abgeleitet wird und
. dem erfassten Bild des Körperabdrucks entnommene Daten unter Berücksichtigung der aktuellen Lage der Zone des Körpers im Vergleich mit ihrer Bezugslage neu positioniert werden.

10. Verfahren nach einem beliebigen der Ansprüche 7 bis 9, **dadurch gekennzeichnet, dass** das Körperabdruckbild und das Adernnetzbild gleichzeitig erfasst werden.

11. Verfahren nach einem beliebigen der Ansprüche 7 bis 10, **dadurch gekennzeichnet, dass** die Zone des Körpers mit zwei Lichtstrahlungen beleuchtet werden, die jeweils zwei getrennte Wellenlängen aufweisen, und dass die zwei Bilder im Verhältnis mit den jeweiligen Wellenlängen erfasst werden.

12. Verfahren nach Anspruch 11, **dadurch gekennzeichnet, dass** zur Erfassung des Körperabdruckbildes die Zone des Körpers mit einer Strahlung mit einer sich im Rot befindenden Wellenlänge beleuchtet wird und zur Erfassung des Adernnetzes die Zone des Körpers mit einer Strahlung mit einer sich im nahen Infrarot befindenden Wellenlänge beleuchtet wird.
